(19) Europäisches Patentamt
European Patent Office
Office européen des brevets

(11) **EP 4 044 129 A1**

(12) **EUROPEAN PATENT APPLICATION**

(43) Date of publication:
**17.08.2022 Bulletin 2022/33**

(21) Application number: **21207974.3**

(22) Date of filing: **12.11.2021**

(51) International Patent Classification (IPC):
**G06V 20/50** *(2022.01)*    **G06V 20/52** *(2022.01)*

(52) Cooperative Patent Classification (CPC):
**G06V 20/50; G06V 20/52**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.02.2021 JP 2021019762**

(71) Applicant: **FUJITSU LIMITED**
**Kawasaki-shi,**
**Kanagawa 211-8588 (JP)**

(72) Inventors:
• **Yoshioka, Takahiro**
 **Kawasaki-shi, Kanagawa, 211-8588 (JP)**
• **Nakazato, Katsuhisa**
 **Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **MOVEMENT HISTORY CHANGE METHOD, MOVEMENT HISTORY CHANGE PROGRAM, MOVEMENT HISTORY CHANGE DEVICE**

(57)    A movement history change method for a computer to execute a process includes acquiring identification information of a first object detected at a first location by a sensor and a detection timing of the first object from object detection history information that indicates time-series of detection; identifying identification information of a second object present at the first location at a first timing corresponding to the detection timing in the object movement history information generated from a video; and changing the identification information of the second object to the identification information of the first object in the object movement history information.

FIG. 1

**Description**

FIELD

The embodiments discussed herein are related to a movement history change technique.

BACKGROUND

In recent years, attention has been drawn to business process analysis for improving the business efficiency and optimizing the entire business. The business process analysis involves analyzing a business flow based on data such as personal computer (PC) operation logs, system logs, and sensor logs to find a bottleneck and optimize the business flow.

In practice, in addition to information acquirable from electronically generated logs, tasks using paper documents, conversations, transportations, movement paths of persons, and the like are also parts of the business process. With improvement of video recognition technology, it has become possible to track an object such as a person or a paper document from a video and analyze a movement path of the object in detail.

Regarding the tracking of an object, a video analysis apparatus that tracks a person from consecutive image frames captured by a camera is known.

Japanese Laid-open Patent Publication No. 2020-91664 is disclosed as related art.

SUMMARY

[TECHNICAL PROBLEM]

When tracking an object captured in a video, a recognition error may occur due to the influence of an obstacle or the like. When a movement history of an object is obtained based on a tracking result including a recognition error, the accuracy of the obtained movement history decreases.

Such a problem occurs not only in the case of obtaining a movement history of a paper document or a person but also in the case of obtaining movement histories of various objects.

In one aspect, an object of the present disclosure is to improve accuracy of a movement history of an object obtained from a video.

[SOLUTION TO PROBLEM]

According to an aspect of the embodiments, a movement history change method for a computer to execute a process includes acquiring identification information of a first object detected at a first location by a sensor and a detection timing of the first object from object detection history information that indicates time-series of detection; identifying identification information of a second object present at the first location at a first timing corresponding to the detection timing in the object movement history information generated from a video; and changing the identification information of the second object to the identification information of the first object in the object movement history information.

[ADVANTAGIOUS EFFECTS OF INVENTION]

According to an aspect, it is possible to improve accuracy of a movement history of an object obtained from a video.

BRIEF DESCRIPTION OF DRAWINGS

FIG. 1 is a functional configuration diagram of a movement history change apparatus;
FIG. 2 is a flowchart of movement history change processing;
FIG. 3 is a configuration diagram of a business process analysis system;
FIG. 4 is a first functional configuration diagram of a video analysis apparatus;
FIG. 5 is a first functional configuration diagram of a collection apparatus;
FIG. 6 is a first functional configuration diagram of a correction apparatus;
FIG. 7 is a diagram illustrating a person moving in a monitoring target region;
FIG. 8 is a diagram illustrating an event list in the business process analysis system;
FIG. 9 is a diagram illustrating location information;
FIG. 10 is a diagram illustrating a first business log containing an operation history of a person M;
FIG. 11 is a diagram illustrating a movement log containing a movement path of the person M;
FIG. 12 is a diagram illustrating a post-change movement log;
FIG. 13 is a flowchart of business log generation processing;
FIG. 14 is a flowchart of first movement log generation processing;
FIG. 15 is a flowchart of first movement log change processing;
FIG. 16 is a flowchart of first location determination processing;
FIG. 17 is a second functional configuration diagram of the video analysis apparatus;
FIG. 18 is a second functional configuration diagram of the correction apparatus;
FIG. 19 is a diagram illustrating a first movement log containing tracking reliability;
FIG. 20 is a diagram illustrating two persons moving in a monitoring target region;
FIG. 21 is a diagram illustrating a video in which two persons overlap each other;
FIG. 22 is a diagram illustrating overlap determination processing;

FIG. 23 is a diagram illustrating a second business log containing an operation history of a person M;

FIG. 24 is a diagram illustrating a second movement log containing the tracking reliability;

FIG. 25 is a diagram illustrating a post-replacement second movement log;

FIG. 26 is a flowchart of second movement log generation processing;

FIG. 27 is a flowchart of second location determination processing;

FIG. 28 is a third functional configuration diagram of the video analysis apparatus;

FIG. 29 is a third functional configuration diagram of the correction apparatus;

FIG. 30 is a diagram illustrating two persons moving together in a monitoring target region;

FIG. 31 is a diagram illustrating a third movement log containing the tracking reliability;

FIG. 32 is a diagram illustrating a post-replacement third movement log;

FIG. 33 is a flowchart of third movement log generation processing;

FIG. 34 is a flowchart of third location determination processing;

FIG. 35 is a configuration diagram of a vehicle management system;

FIG. 36 is a functional configuration diagram of a video analysis apparatus in the vehicle management system;

FIG. 37 is a functional configuration diagram of a collection apparatus in the vehicle management system;

FIG. 38 is a functional configuration diagram of a correction apparatus in the vehicle management system;

FIG. 39 illustrates vehicles moving in a monitoring target region;

FIG. 40 is a diagram illustrating an event list in the vehicle management system;

FIG. 41 is a diagram illustrating vehicle information;

FIG. 42 is a diagram illustrating a detection log containing a detection history of a vehicle;

FIG. 43 is a diagram illustrating a movement log containing movement paths of two vehicles;

FIG. 44 is a diagram illustrating a post-change movement log containing the movement paths of the two vehicles;

FIG. 45 is a flowchart of detection log generation processing;

FIG. 46 is a flowchart of fourth movement log generation processing;

FIG. 47 is a flowchart of second movement log change processing;

FIG. 48 is a flowchart of fourth location determination processing;

FIG. 49 is a fourth functional configuration diagram of the correction apparatus;

FIG. 50 is a diagram illustrating an integrated movement log;

FIG. 51 is a flowchart of integrated movement log generation processing; and

FIG. 52 is a hardware configuration diagram of an information processing apparatus.

DESCRIPTION OF EMBODIMENTS

The embodiments will be described below in details with reference to the drawings.

In order for the business process analysis to analyze a relationship between a movement path of an object such as a paper document or a person and an electronically generated log, it is desirable that these pieces of information be accurately associated with each other.

In the case where an object captured in a video is tracked with the video recognition technology, use of a high-quality video makes it possible to obtain a movement path with certain accuracy. However, the cost of an imaging apparatus for capturing a high-quality video is often high. From the viewpoint of security, a high-quality video is not necessarily provided for the business process analysis.

In the case where a moving object is temporarily hidden by an obstacle, it is difficult to track the object again as the same object. In the case where two persons have conversations at a particular location, it is difficult to accurately track the two persons moving after completing the conversations.

On the other hand, in a case where an object is tracked using a low-quality video, a recognition error may possibly occur due to noise. In the case where multiple persons wearing white coats or uniforms are tracked by using a low-quality video, a similarity between two person regions does not change much even if a combination of person regions to be associated among frames is changed. Therefore, the accuracy of recognizing the persons decreases.

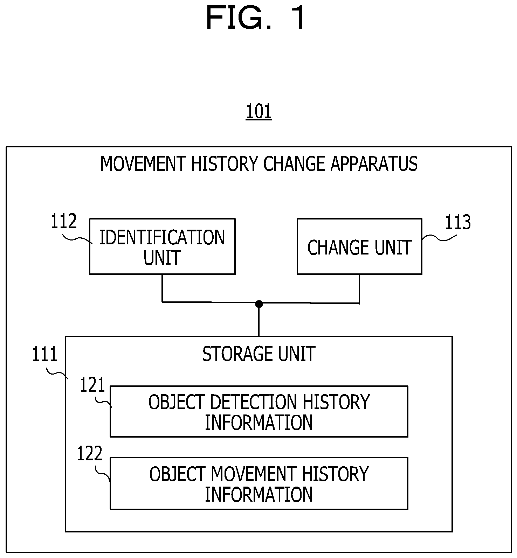

FIG. 1 illustrates a functional configuration example of a movement history change apparatus according to an embodiment. A movement history change apparatus 101 in FIG. 1 includes a storage unit 111, an identification unit 112, and a change unit 113. The storage unit 111 stores object detection history information 121 and object movement history information 122 that is generated from a video. The identification unit 112 and the change unit 113 perform movement history change processing using the object detection history information 121 and the object movement history information 122.

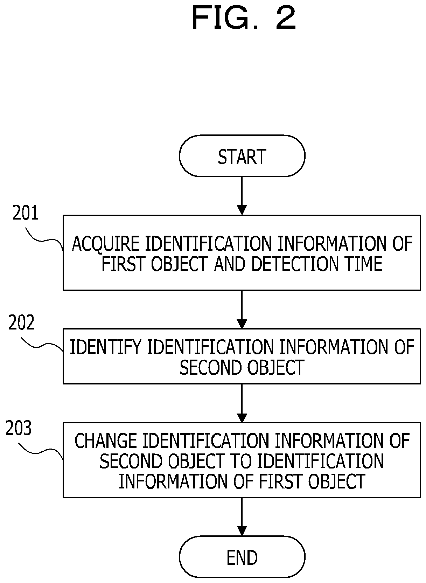

FIG. 2 is a flowchart illustrating an example of the movement history change processing performed by the movement history change apparatus 101 in FIG. 1. First, the identification unit 112 acquires identification information of a first object detected at a predetermined location by a sensor and a detection time of the first object from the object detection history information 121 (step 201).

Next, the identification unit 112 identifies identification information of a second object present at the predetermined location at a predetermined time corresponding to the detection time of the first object in the object movement history information 122 (step 202). The change unit 113 changes the identified identification information of the second object to the acquired identification information of the first object in the object movement history information 122 (step 203).

The movement history change apparatus 101 in FIG. 1 is capable of improving the accuracy of a movement history of an object obtained from a video.

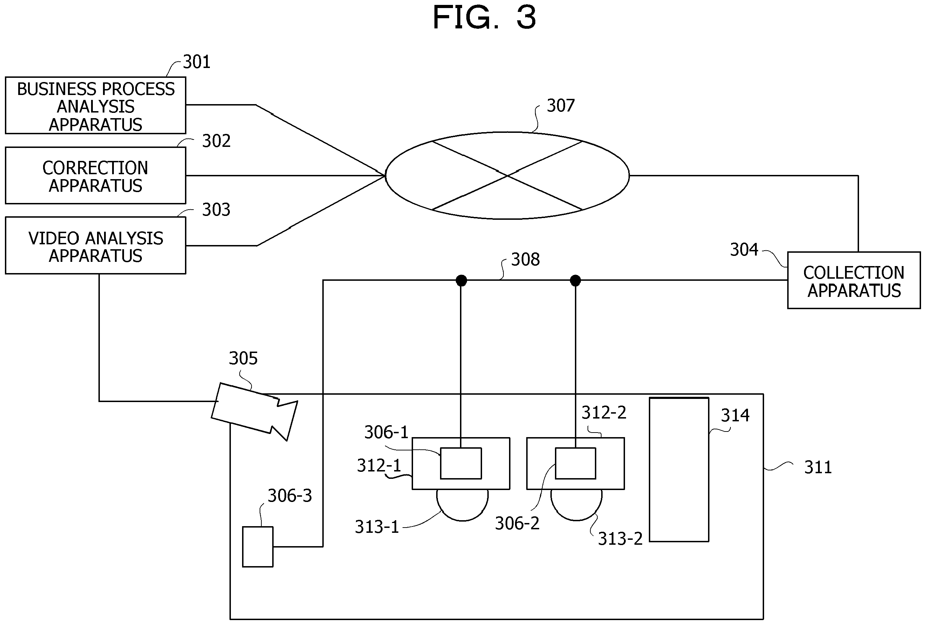

FIG. 3 illustrates a configuration example of a business process analysis system including the movement history change apparatus 101 in FIG. 1. The business process analysis system in FIG. 3 includes a business process analysis apparatus 301, a correction apparatus 302, a video analysis apparatus 303, a collection apparatus 304, an imaging apparatus 305, and terminal devices 306-1 to 306-3. The correction apparatus 302 corresponds to the movement history change apparatus 101 in FIG. 1.

The business process analysis apparatus 301, the correction apparatus 302, the video analysis apparatus 303, and the collection apparatus 304 are able to communicate with each other via a communication network 307. The communication network 307 is a local area network (LAN) or a wide area network (WAN).

A monitoring target region 311 is a workspace in which office work is performed. In the monitoring target region 311, the terminal device 306-3, a desk 312-1, a desk 312-2, and a shelf 314 are installed. The terminal device 306-i (i = 1, 2) is placed on the desk 312-i and a chair 313-i is placed in front of the desk 312-i.

The terminal devices 306-1 and 306-2 are PCs, and the terminal device 306-3 is a printer. The terminal devices 306-1 to 306-3 are examples of sensors. Four or more terminal devices 306-i may be installed in the monitoring target region 311.

The imaging apparatus 305 is, for example, a camera having an image sensor such as a charge-coupled device (CCD) and a complementary metal-oxide-semiconductor (CMOS), captures a video of the monitoring target region 311, and outputs the video to the video analysis apparatus 303.

The video analysis apparatus 303 analyzes the video output from the imaging apparatus 305 and generates a movement log indicating a movement path of an object captured in the video. The video analysis apparatus 303 transmits the movement log to the correction apparatus 302. The object captured in the video is, for example, a person, and the movement log is an example of the object movement history information 122.

The collection apparatus 304 and the terminal devices 306-i (i = 1, 2, 3) are able to communicate with each other via a communication network 308. The communication network 308 is a LAN or a WAN.

The terminal device 306-i (i = 1, 2) uses operation log collection software to detect identification information of a person who is seated on the chair 313-i and is operating the terminal device 306-i and what type of operation was performed by the person. The terminal device 306-i transmits the identification information of the person, the detection time, and the operation type to the collection apparatus 304.

The terminal device 306-3 detects the identification information of a person who is operating the terminal device 306-3 and what type of operation was performed by the person, and transmits the identification information of the person, the detection time, and the operation type to the collection apparatus 304.

The collection apparatus 304 generates a business log containing the information received from the terminal device 306-i (i = 1, 2, 3) and transmits the business log to the correction apparatus 302. The business log is an example of the object detection history information 121.

The correction apparatus 302 uses the business log received from the collection apparatus 304 to correct the movement log received from the video analysis apparatus 303 and transmits the corrected movement log to the business process analysis apparatus 301. The business process analysis apparatus 301 performs business process analysis by using the movement log received from the correction apparatus 302, and outputs an analysis result.

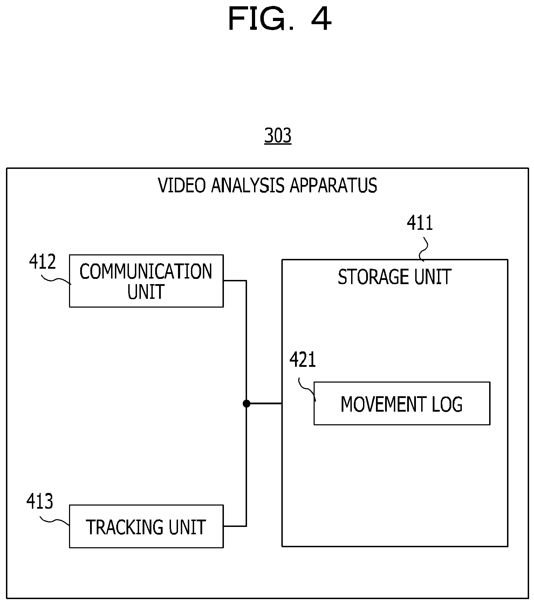

FIG. 4 illustrates a first functional configuration example of the video analysis apparatus 303 in FIG. 3. The video analysis apparatus 303 in FIG. 4 includes a storage unit 411, a communication unit 412, and a tracking unit 413. The communication unit 412 receives a video of the monitoring target region 311 from the imaging apparatus 305.

The tracking unit 413 tracks a person captured in the video to generate a movement log 421 indicating a movement path of the person, and stores the movement log 421 in the storage unit 411. Each entry in the movement log 421 contains the identification information of a person, a time, and a location.

For example, the tracking unit 413 is able to track a person in a video by using a learned model generated by machine learning using boosting or the like. The tracking unit 413 is able to determine a location where a person is present by determining whether or not the person enters a region of interest (ROI) set in advance on an image. The communication unit 412 transmits the generated movement log 421 to the correction apparatus 302.

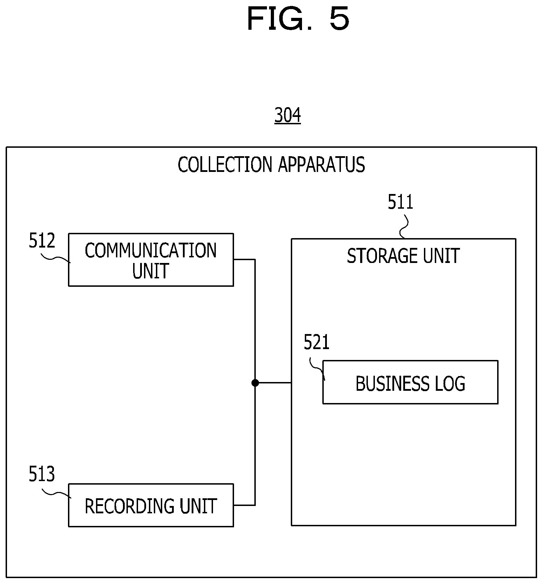

FIG. 5 illustrates a first functional configuration example of the collection apparatus 304 in FIG. 3. The collection apparatus 304 in FIG. 5 includes a storage unit 511, a communication unit 512, and a recording unit 513. The communication unit 512 receives the identification information of a person, the detection time, and the operation type from the terminal device 306-i.

The recording unit 513 generates a business log 521 containing the received information and stores the business log 521 in the storage unit 511. The business log 521 is a searchable database. As the business log 521, a relational database, an object-oriented database, or the like may be used. Each entry in the business log 521 contains the identification information of a person, the detection time, the identification information of the terminal device 306-i, and the operation type. The communication unit 512 transmits the generated business log 521 to the correction apparatus 302.

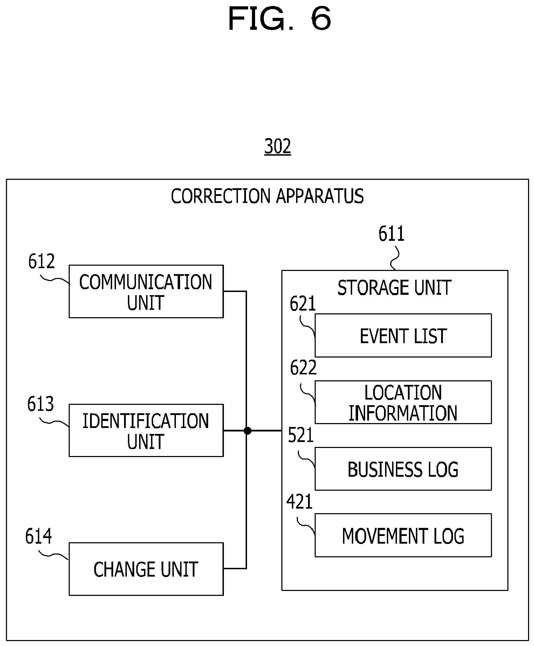

FIG. 6 illustrates a first functional configuration example of the correction apparatus 302 in FIG. 3. The correction apparatus 302 in FIG. 6 includes a storage unit 611, a communication unit 612, an identification unit 613, and a change unit 614. The storage unit 611, the identification unit 613, and the change unit 614 correspond to the storage unit 111, the identification unit 112, and the change unit 113 in FIG. 1, respectively.

The communication unit 612 receives the business log 521 from the collection apparatus 304 and receives the movement log 421 from the video analysis apparatus 303. The identification unit 613 stores the received business log 521 and movement log 421 in the storage unit 611.

The storage unit 611 stores an event list 621 and location information 622. The event list 621 is a list of events each indicating an operation type usable for determining a location contained in the movement log 421 among operation types that may be contained in the business log 521. The location information 622 is information based on which the identification information of the terminal device 306-i contained in the business log 521 is associated with a location contained in the movement log 421.

The identification unit 613 acquires the identification information of a first person detected by any of the terminal devices 306-i, the identification information of the terminal device 306-i, and the detection time of the first person from the business log 521 based on the events included in the event list 621. Using the location information 622, the identification unit 613 identifies the identification information of a second person who was present at the location of the terminal device 306-i at a predetermined time corresponding to the detection time of the first person in the movement log 421.

The change unit 614 corrects the movement log 421 by changing the identified identification information of the second person to the acquired identification information of the first person in the movement log 421. The communication unit 612 transmits the corrected movement log 421 to the business process analysis apparatus 301.

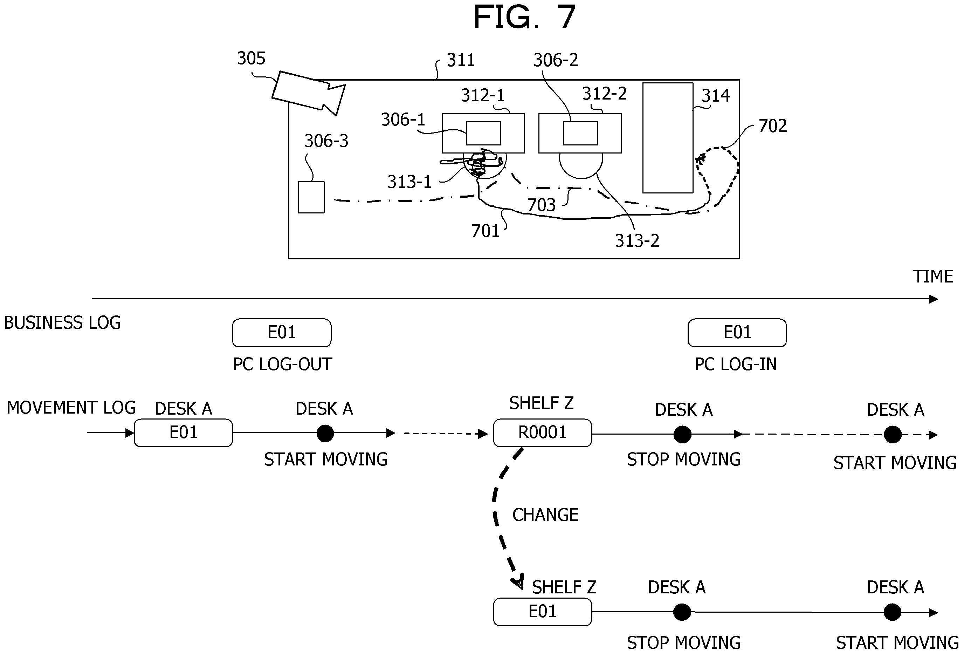

FIG. 7 illustrates an example of a person moving in the monitoring target region 311 in FIG. 3. A solid line 701 indicates a movement path along which a person M who works by using the terminal device 306-1 on the desk 312-1 temporarily leaves the desk 312-1 and moves to the shelf 314 to take a book or the like. A broken line 702 indicates a movement path in a period when the person M stays in front of the shelf 314. A dashed-dotted line 703 indicates a movement path along which the person M returns to the desk 312-1 while holding the book or the like and then moves from the desk 312-1 to the terminal device 306-3.

The person M performs a log-out operation on the terminal device 306-1 when leaving the desk 312-1, and performs a log-in operation on the terminal device 306-1 when returning to the desk 312-1.

In this case, the business log 521 records data containing identification information "E01" of the person M and the operation type "PC log-out" when the person M leaves the desk 312-1, and records data containing "E01" and the operation type "PC log-in" when the person M returns to the desk 312-1.

In the video of the imaging apparatus 305, the person M moving along the movement paths indicated by the solid line 701 and the dashed-dotted line 703 is captured. In the video of the imaging apparatus 305, the person M operating the terminal device 306-1 is captured in a predetermined region around the terminal device 306-1. However, the person M on the movement path indicated by the broken line 702 is hidden by the shelf 314 and is not captured.

In this case, the movement log 421 records "E01" and "desk A" denoting the name of the desk 312-1 as data indicating a state where the person M is seated at the desk 312-1 on the movement path indicated by the solid line 701. Thereafter, the person M leaves the desk 312-1 and starts moving.

Next, the movement log 421 records temporary identification information "R0001" indicating a new person and "shelf Z" denoting the name of the shelf 314 as data indicating a state where the person M appears from the side of the shelf 314 on the movement path indicated by the dashed-dotted line 703. Thereafter, the person M returns to the desk 312-1 to stop moving, logs into the terminal device 306-1, performs editing work for a while, and then starts moving toward the terminal device 306-3.

With reference to the business log 521 and the movement log 421, the identification unit 613 of the correction apparatus 302 determines that the person "E01" who performed "PC log-in" at the location "desk A" is the same as the person "R0001" who was present at the location "desk A" at that time. Therefore, the change unit 614 changes all "R0001" consecutively recorded in a section including the detection time of "PC log-in" to "E01" in the movement log 421.

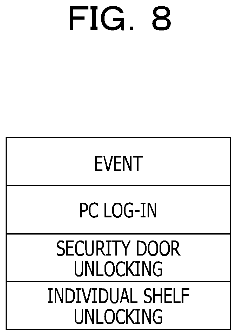

FIG. 8 illustrates an example of the event list 621 illustrated in FIG. 6. Events contained in the event list 621 in FIG. 8 are "PC log-in", "security door unlocking", and "individual shelf unlocking". In the event list 621, an event such as "device unlocking" using a one-time password, a number individually assigned in advance, or the like may be also registered.

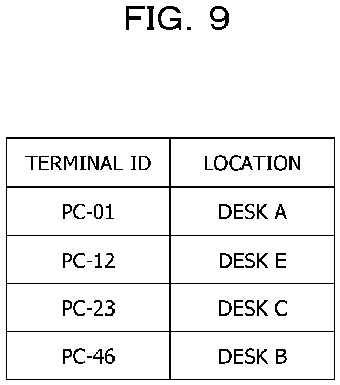

FIG. 9 illustrates an example of the location information 622 in FIG. 6. The location information 622 in FIG. 9 indicates an association relationship between a terminal ID and a location. The terminal ID is the identification information of the terminal device 306-i, and the location indicates the name of the location where the terminal device 306-i indicated by the terminal ID is installed.

For example, "PC-01" is the identification information of the terminal device 306-1, and "desk A" associated with "PC-01" is the name of the desk 312-1 on which the terminal device 306-1 is installed. "PC-46" is the identification information of the terminal device 306-2, and "desk B" associated with "PC-46" is the name of the desk 312-2 on which the terminal device 306-2 is installed.

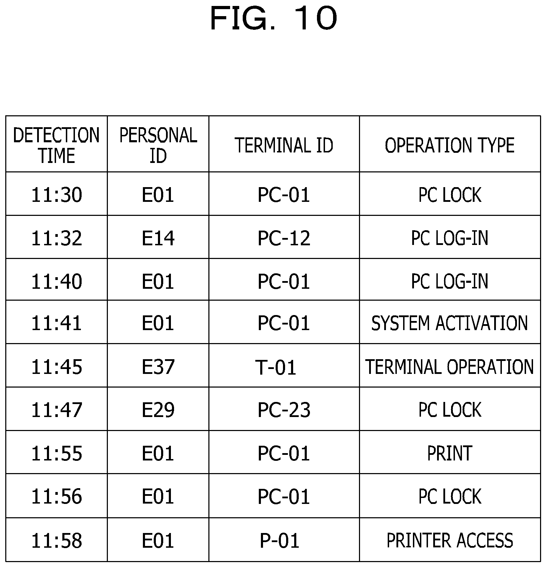

FIG. 10 illustrates an example of a first business log 521 containing an operation history of the person M in the monitoring target region 311 in FIG. 7. The business log 521 illustrated in FIG. 10 indicates an association relationship among the detection time, the personal ID, the terminal ID, and the operation type.

The personal ID is identification information, such as an employee number, based on which an individual is identifiable. The detection time specifies a time at which an operation performed on the terminal device 306-i identified by the terminal ID by the person identified by the personal ID was detected, and the operation type specifies what type of operation was performed.

As the operation type, "PC lock", "PC log-in", "PC log-out", "system activation", "terminal operation", "print", "printer access", and the like are recorded. "System activation" indicates an operation of activating an application program, "print" indicates an operation of issuing a printout instruction, and "printer access" indicates a printout operation on a printer.

For example, the person M identified by "E01" performs "PC lock" on the terminal device 306-1 identified by "PC-01" at time "11:30" and performs "PC log-in" on the terminal device 306-1 at time "11:40". The person M performs "system activation" on the terminal device 306-1 at time "11:41".

Next, the person M performs "print" on the terminal device 306-1 at time "11:55" and performs "PC lock" on the terminal device 306-1 at time "11:56". The person M performs "printer access" on the terminal device 306-3 identified by "P-01" at time "11:58".

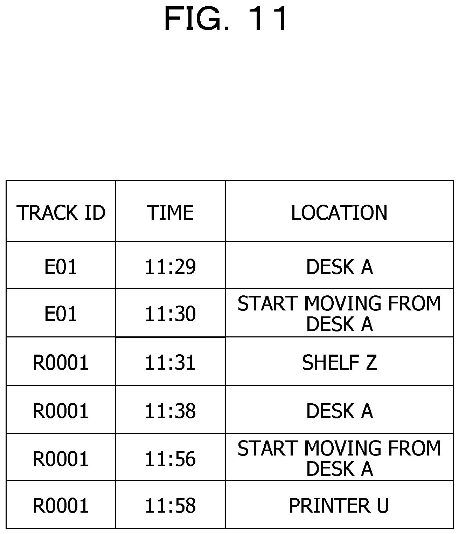

FIG. 11 illustrates an example of the movement log 421 containing the movement path of the person M in the monitoring target region 311 in FIG. 7. The movement log 421 in FIG. 11 specifies an association relationship among a track ID, a time, and a location.

The track ID is identification information that is generated by tracking processing and is assigned to a person captured in a video. The time indicates a time at which the person was captured, and the location indicates the name of a location at which the captured person was present. "Desk A" denotes the name of the desk 312-1, "shelf Z" denotes the name of the shelf 314, and "printer U" denotes the name of the terminal device 306-3.

For example, the person M identified by "E01" is present at the location "desk A" at time "11:29" and starts moving from the location "desk A" at time "11:30". A person identified by "R0001" is present at the location "shelf Z" at time "11:31", starts moving from the location "desk A" at time "11:56" and is present at the location "printer U" at time "11:58".

The movement log 421 may include not only the names of the locations but also xy coordinates indicating a position in the captured image.

First, the identification unit 613 searches the business log 521 in FIG. 10 for an entry in which any of the events registered in the event list 621 in FIG. 8 is contained as the operation type, and acquires the entry at a detection time "11:32" containing "PC log-in".

Next, the identification unit 613 extracts a personal ID "E14" and a terminal ID "PC-12" from the entry at the detection time "11:32" acquired from the business log 521, and obtains a location "desk E" associated with "PC-12" by using the location information 622 in FIG. 9. "Desk E" is an example of a predetermined location.

Next, the identification unit 613 acquires, from the movement log 421 in FIG. 11, an entry at a predetermined time corresponding to the detection time "11:32" of the above-acquired entry. The predetermined time used herein is, for example, a time within a predetermined period including the detection time or a time immediately before the detection time. When the time immediately before the detection time is used as the predetermined time, an entry at time "11:31" is acquired as the entry at the predetermined time. The identification unit 613 extracts the track ID "R0001" and the location "shelf Z" from the entry.

"Desk E" obtained from the entry in the business log 521 is different from "shelf Z" extracted from the entry in the movement log 421. Thus, the identification unit 613 searches the business log 521 for a next entry in which any of the events registered in the event list 621 is contained as the operation type, and acquires an entry at a detection time "11:40" containing "PC log-in".

Next, the identification unit 613 extracts the personal ID "E01" and the terminal ID "PC-01" from the entry at the detection time "11:40" acquired from the business log 521, and obtains the location "desk A" associated with "PC-01" by using the location information 622. "Desk A" is an example of the predetermined location.

Next, the identification unit 613 acquires an entry at time "11:38" immediately before the detection time "11:40" from the movement log 421, and extracts the track ID "R0001" and the location "desk A" from the entry.

"Desk A" obtained from the entry in the business log 521 is the same as "desk A" extracted from the entry in the movement log 421. On the other hand, "E01" extracted from the entry in the business log 521 is different from "R0001" extracted from the entry in the movement log 421.

In this case, the identification unit 613 determines that the person "R0001" who was present at the location "desk A" at time "11:38" is the same as the person "E01" who performed "PC log-in" at the location "desk A" at the detection time "11:40".

In the movement log 421, the change unit 614 changes all "R0001" recorded in a period from time "11:31" to time "11:58" including the predetermined time "11:38" to "E01".

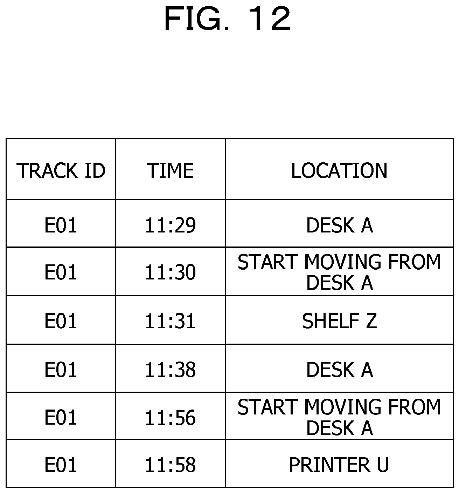

FIG. 12 illustrates an example of a post-change movement log 421. In the movement log 421 in FIG. 12, the track IDs at time "11:31", time "11:38", time "11:56" and time "11:58" are changed from "R0001" to "E01".

In the business process analysis, the business process analysis apparatus 301 searches the movement log 421 in FIG. 12 for the times and locations associated with the track IDs "E01" of an analysis target, and thereby generates a movement path of the person M including the searched-out times and locations. The business process analysis apparatus 301 detects a bottleneck in the work of the person M by using the generated movement path, and optimizes the business flow of the person M.

The business process analysis system in FIG. 3 identifies a location where the actions of the persons match each other between the business log 521 and the movement log 421, and corrects the movement log 421 such that the track ID at the location is changed to the personal ID in the business log 521. Therefore, even in the case where the movement log 421 is generated from a low-quality video in which it is difficult to identify a person or where tracking of a person in the video was interrupted because the person was hidden, it is possible to correct an error and improve the accuracy of the movement log 421.

By performing the business process analysis using the corrected movement log 421, it is possible to accurately identify a location of each person in an office or the like where strong security is secured by using PC log-in. The monitoring target region 311 is not limited to an office, and may be a manufacturing site or the like where a work terminal is associated with a specific person by the time.

The business process analysis is performed by using the corrected movement log 421, which leads to an improvement of the efficiency of the processing of searching for the times and the locations associated with the track IDs of an analysis target.

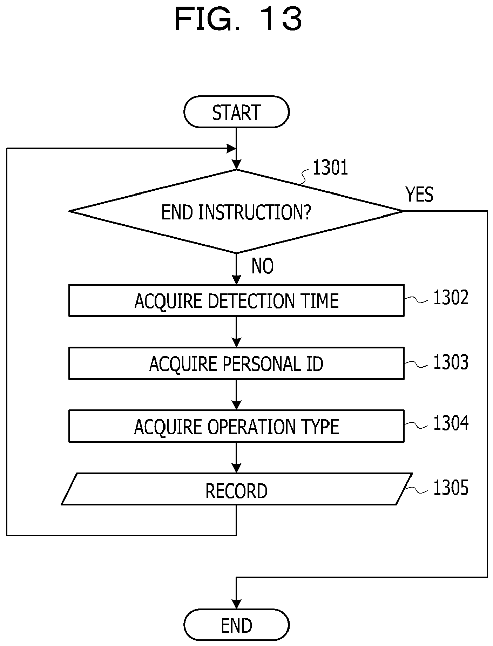

FIG. 13 is a flowchart illustrating an example of business log generation processing performed by the collection apparatus 304 in FIG. 5. First, the recording unit 513 checks whether an end instruction is input from a user (step 1301).

When the end instruction is not input (step 1301, NO), the recording unit 513 acquires the detection time of an operation detected by any of the terminal devices 306-i via the communication unit 512 (step 1302). From the terminal device 306-i, the recording unit 513 acquires the personal ID of the person who performed the operation (step 1303), and acquires the operation type of the operation (step 1304).

Next, the recording unit 513 generates an entry containing the terminal ID of the terminal device 306-i and the detection time, the personal ID, and the operation type acquired from the terminal device 306-i and records the entry in the business log 521 (step 1305). The recording unit 513 iterates the processing in step 1301 and the subsequent steps. When the end instruction is input (step 1301, YES), the recording unit 513 ends the processing.

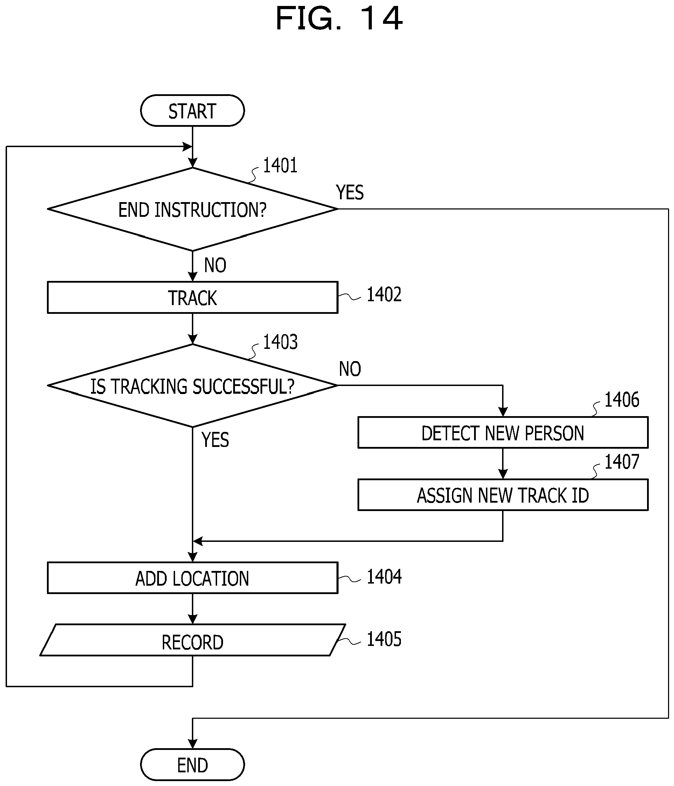

FIG. 14 is a flowchart illustrating an example of first movement log generation processing performed by the video analysis apparatus 303 in FIG. 4. First, the tracking unit 413 checks whether an end instruction is input from a user (step 1401).

When the end instruction is not input (step 1401, NO), the tracking unit 413 tracks a person captured in the video (step 1402) and checks whether the tracking is successful (step 1403).

If the tracking is successful (step 1403, YES), the tracking unit 413 adds the name of a location indicated by a ROI that the person entered in the image (step 1404). Next, the tracking unit 413 generates an entry of the person containing the track ID, the time, and the location and records the entry in the movement log 421 (step 1405). The tracking unit 413 iterates the processing in step 1401 and the subsequent steps.

On the other hand, if the tracking fails (step 1403, NO), the tracking unit 413 detects a new person (step 1406), assigns a new track ID to the detected person (step 1407), and performs the processing in step 1404 and the subsequent step. When the end instruction is input (step 1401, YES), the tracking unit 413 ends the processing.

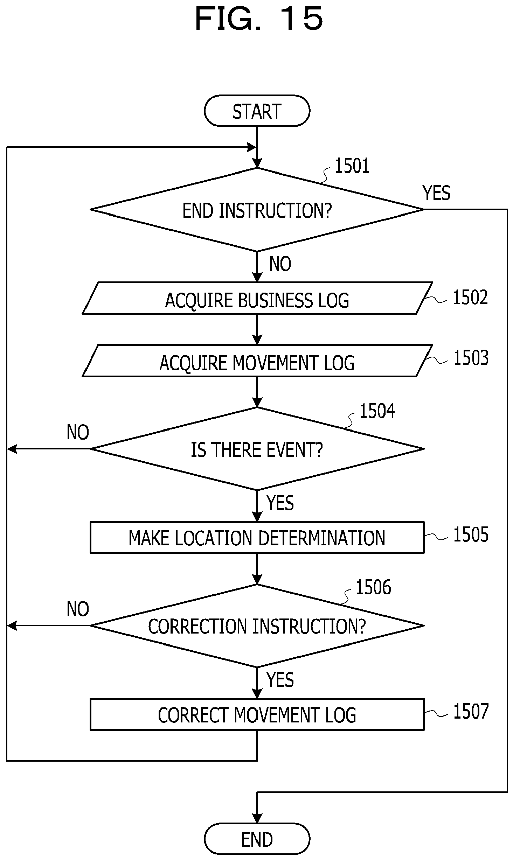

FIG. 15 is a flowchart illustrating an example of first movement log change processing performed by the correction apparatus 302 in FIG. 6. First, the identification unit 613 checks whether an end instruction is input from a user (step 1501).

When the end instruction is not input (step 1501, NO), the identification unit 613 acquires, via the communication unit 612, the business log 521 from the collection apparatus 304 (step 1502) and the movement log 421 from the video analysis apparatus 303 (step 1503). The identification unit 613 searches the acquired business log 521 for the operation type indicating any of the events registered in the event list 621 and thereby checks whether the business log 521 contains an event (step 1504).

When the business log 521 contains an event (step 1504, YES), the identification unit 613 makes location determination to determine whether to correct the acquired movement log 421 (step 1505). When determining to correct the movement log 421, the identification unit 613 outputs a correction instruction indicating a change target track ID and a post-change track ID to the change unit 614.

Next, the change unit 614 checks whether the correction instruction is output from the identification unit 613 (step 1506). When the correction instruction is output (step 1506, YES), the change unit 614 corrects the movement log 421 by changing the track ID of the change target specified in the correction instruction to the post-change track ID specified therein in the movement log 421 (step 1507). The correction apparatus 302 iterates the processing in step 1501 and the subsequent steps.

When the business log 521 contains no event (step 1504, NO), the correction apparatus 302 iterates the processing in step 1501 and the subsequent steps. When the correction instruction is not output (step 1506, NO), the correction apparatus 302 iterates the processing in step 1501 and the subsequent steps. When the end instruction is input (step 1501, YES), the correction apparatus 302 ends the processing.

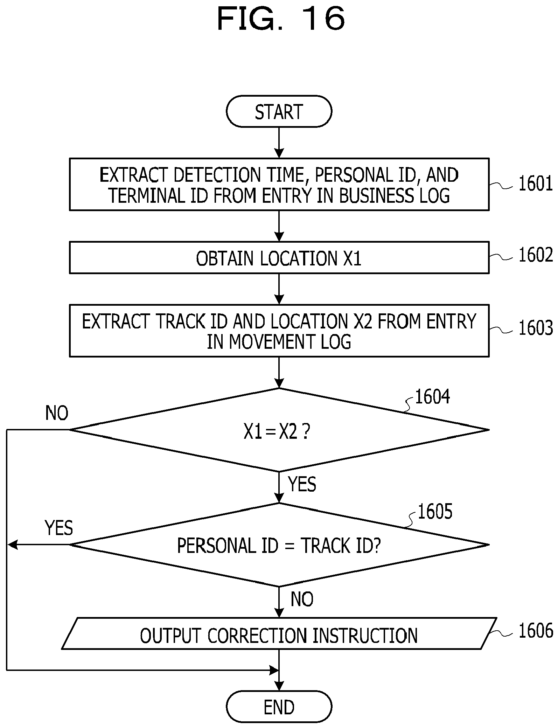

FIG. 16 is a flowchart illustrating an example of first location determination processing in step 1505 in FIG. 15. First, the identification unit 613 acquires an entry containing an event as the operation type from the business log 521, and extracts the detection time, the personal ID, and the terminal ID from the entry (step 1601). The identification unit 613 obtains a location X1 associated with the extracted terminal ID by using the location information 622 (step 1602).

Next, the identification unit 613 acquires, from the movement log 421, an entry at the predetermined time corresponding to the detection time extracted from the entry in the business log 521, and extracts a track ID and a location X2 from the entry (step 1603). The identification unit 613 compares the location X1 with the location X2 (step 1604).

When the location X1 and the location X2 match each other (step 1604, YES), the identification unit 613 compares the personal ID extracted from the entry in the business log 521 with the track ID extracted from the entry in the movement log 421 (step 1605).

When the personal ID and the track ID do not match each other (step 1605, NO), the identification unit 613 determines to correct the movement log 421, and outputs a correction instruction specifying the track ID of the change target and the post-change track ID to the change unit 614 (step 1606). The track ID of the change target covers all the same track IDs as the track ID extracted from the entry in the movement log 421, and the post-change track ID is the personal ID extracted from the entry in the business log 521.

When the location X1 and the location X2 do not match each other (step 1604, NO), the identification unit 613 determines not to correct the movement log 421, and ends the processing without outputting the correction instruction. When the personal ID and the track ID match each other (step 1605, YES), the identification unit 613 determines not to correct the movement log 421, and ends the processing without outputting the correction instruction.

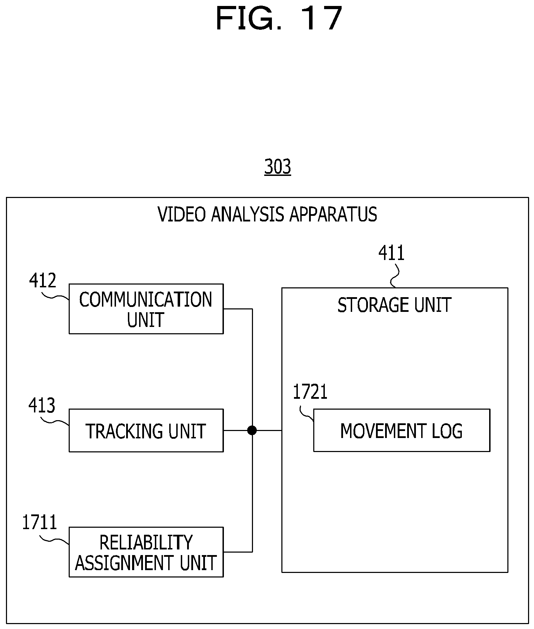

FIG. 17 illustrates a second functional configuration example of the video analysis apparatus 303 in FIG. 3. The video analysis apparatus 303 in FIG. 17 has a configuration in which a reliability assignment unit 1711 is added to the video analysis apparatus 303 in FIG. 4.

The reliability assignment unit 1711 assigns tracking reliability to a person tracked at each time in the video. The tracking unit 413 generates a movement log 1721 containing the tracking reliability and stores the movement log 1721 in the storage unit 411. Each entry in the movement log 1721 contains the track ID, the tracking reliability, the time, and the location.

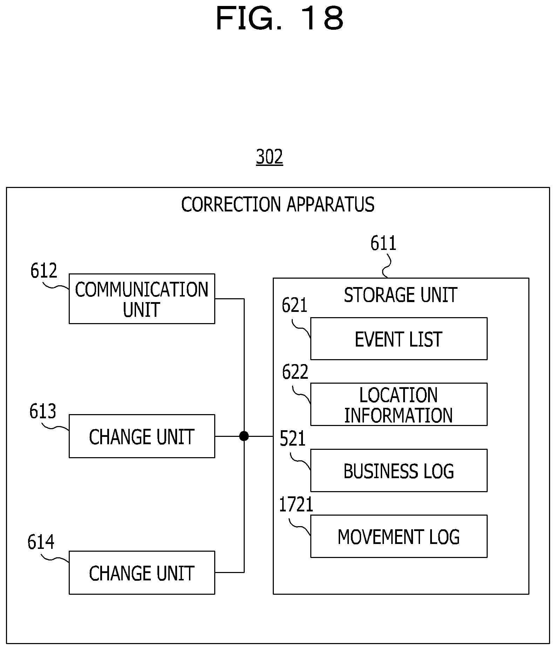

FIG. 18 illustrates a second functional configuration example of the correction apparatus 302 in FIG. 3. The correction apparatus 302 in FIG. 18 has the same configuration as that of the correction apparatus 302 in FIG. 6. The storage unit 611 stores the movement log 1721 in FIG. 17 instead of the movement log 421 in FIG. 6. The identification unit 613 and the change unit 614 perform the movement log change processing using the movement log 1721.

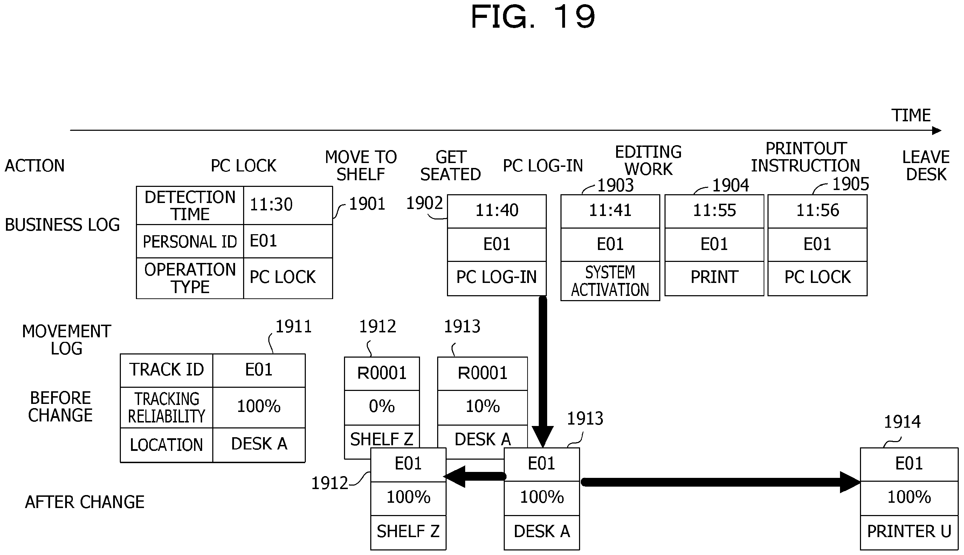

FIG. 19 illustrates an example of a first movement log 1721 containing the tracking reliability for the person M moving along the movement path illustrated in FIG. 7. Entries 1901 to 1905 represent entries in the business log 521 in which the terminal ID is omitted. Entries 1911 to 1914 represent entries in the movement log 1721 in which the time is omitted.

First, when the person M identified by "E01" is seated at the desk 312-1, the entry 1911 in the movement log 1721 is generated. The tracking reliability of the entry 1911 is set to 100%.

Next, at time "11:30", the person M performs "PC lock" on the terminal device 306-1 on the desk 312-1 and accordingly the entry 1901 in the business log 521 is generated.

Next, the person M temporarily leaves the desk 312-1 to move to the shelf 314, is hidden behind the shelf 314, and then appears from the side of the shelf 314. At this time, the entry 1912 in the movement log 1721 is generated. In this case, the tracking of the person M fails and new identification information "R0001" is assigned. For this reason, the tracking reliability of the entry 1912 is set to 0%.

Next, when the person M returns to the desk 312-1 and gets seated, the entry 1913 in the movement log 1721 is generated. In this case, since the tracking of the person M is successful, the tracking reliability of the entry 1913 is set to 10%.

Next, at time "11:40", the person M performs "PC log-in" on the terminal device 306-1 and accordingly the entry 1902 in the business log 521 is generated. Next, at time "11:41", the person M performs "system activation" on the terminal device 306-1 and accordingly the entry 1903 in the business log 521 is generated. The person M performs editing work.

Next, at time "11:55", the person M performs "print" on the terminal device 306-1 to issue a printout instruction and accordingly the entry 1904 in the business log 521 is generated. Next, at time "11:56", the person M performs "PC lock" on the terminal device 306-1 and accordingly the entry 1905 in the business log 521 is generated. The person M leaves the desk 312-1 again and moves to the terminal device 306-3.

For example, immediately after the entry 1902 in the business log 521 is generated, the identification unit 613 of the correction apparatus 302 acquires the entry 1913 in the movement log 1721 generated immediately before the entry 1902. The identification unit 613 determines that the person "R0001" who was seated at the desk 312-1 indicated by the location "desk A" in the entry 1913 is the person "E01" who performed "PC log-in" on the terminal device 306-1 on the desk 312-1.

Next, the change unit 614 changes "R0001" recorded in the entries 1912 and 1913 in the movement log 1721 to "E01". Since it is confirmed that the person "R0001" is the person "E01", the change unit 614 changes the tracking reliability of the entries 1912 and 1913 to 100%.

Thereafter, the person M is tracked as the person "E01", and the entry 1914 in the movement log 1721 is generated when the person M is present at the location of the terminal device 306-3. In this case, since the tracking of the person M is successful, the tracking reliability of the entry 1914 is set to 100%.

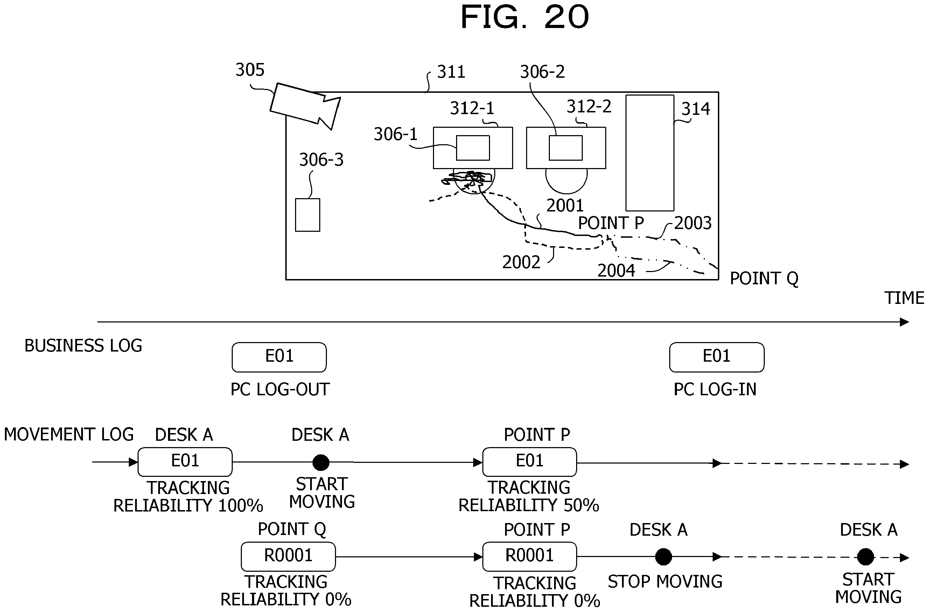

FIG. 20 illustrates an example of two persons moving in the monitoring target region 311 in FIG. 3. A solid line 2001 indicates a movement path along which a person M who works using the terminal device 306-1 on the desk 312-1 temporarily leaves the desk 312-1 and moves to a point P. A broken line 2002 indicates a movement path along which the person M returns to the desk 312-1 after having conversations with a person L at the point P.

A dashed-dotted line 2003 indicates a movement path along which the person L moves from a point Q to the point P. A dashed-two dotted line 2004 indicates a movement path along which the person L returns to the point Q after having conversations with the person M at the point P. In this case, the person M and the person L are present at the point P at the same time.

When the two persons are present at the same location at the same time as described above, the persons overlapping each other are seen in the video. Since the person M and the person L overlap each other at the point P, the tracking reliability for the person M and the person L decreases, and it is erroneously determined that the person L moves from the point P to the desk 312-1 and the person M moves from the point P to the point Q.

The person M performs a log-out operation on the terminal device 306-1 when leaving the desk 312-1, and performs a log-in operation on the terminal device 306-1 when returning to the desk 312-1. In this case, the business log 521 records data containing identification information "E01" of the person M and the operation type "PC log-out" when the person M leaves the desk 312-1, and records data containing "E01" and the operation type "PC log-in" when the person M returns to the desk 312-1.

In the movement log 1721, "E01" and "desk A" denoting the name of the desk 312-1 are recorded as data indicating a state where the person M is seated at the desk 312-1 on the movement path indicated by the solid line 2001. The tracking reliability of this data is set to 100%. Thereafter, the person M leaves the desk 312-1 and starts moving.

Next, "E01" and "point P" are recorded as data indicating a state where the person M has conversations with the person L at the point P. Since the person M and the person L overlap each other at the point P, the tracking reliability of this data is set to 50%. After the conversations end, the person M returns to the desk 312-1 by moving along the movement path indicated by the broken line 2002. However, if the person M is replaced with the person L, the movement path indicated by the dashed-two dotted line 2004 is erroneously associated with "E01".

On the other hand, on the movement path indicated by the dashed-dotted line 2003, temporary identification information "R0001" identifying a new person and "point Q" are recorded as data indicating a state where the person L appears at the point Q. Since the person L is a new person, the tracking reliability of this data is set to 0%.

Next, "R0001" and "point P" are recorded as data indicating a state where the person L has conversations with the person M at the point P. The tracking reliability of this data is set to 0%. After the conversations end, the person L returns to the point Q by moving along the movement path indicated by the dashed-two dotted line 2004. However, if the person L is replaced with the person M, the movement path indicated by the broken line 2002 is erroneously associated with "R0001".

As a result, the movement log 1721 records a situation in which the person identified by "R0001" returns to "desk A" and stops moving on the movement path indicated by the broken line 2002, and then leaves "desk A" again to start moving.

With reference to the business log 521 and the movement log 1721, the identification unit 613 of the correction apparatus 302 determines that the person "E01" who performed "PC log-in" at the location "desk A" is the same as the person "R0001" who was present at the location "desk A" at that time. Since the person "E01" and the person "R0001" overlapped each other at the point P, the identification unit 613 determines that the movement paths of the person "E01" and the person "R0001" after that time are replaced with each other.

Therefore, in the movement log 1721, the change unit 614 replaces "R0001" and "E01", which were recorded after the time when the person "E01" and the person "R0001" overlapped each other at the point P, with each other. The point P is an example of a specific location, and the time when the person "E01" and the person "R0001" overlapped each other at the point P is an example of a specific time.

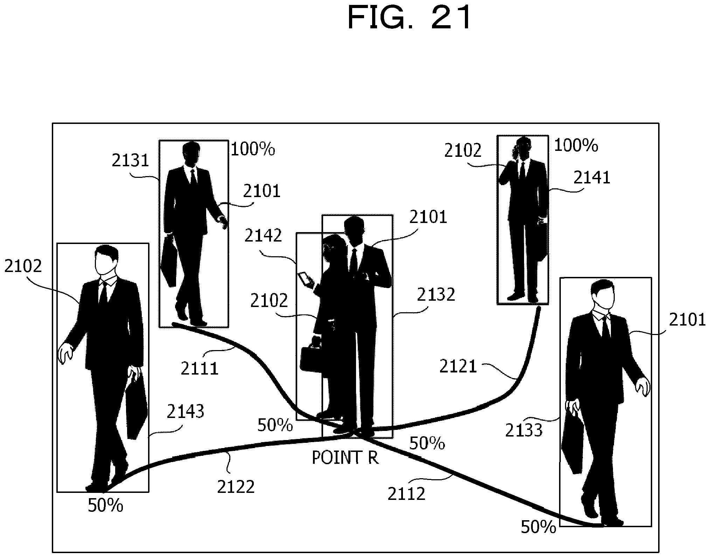

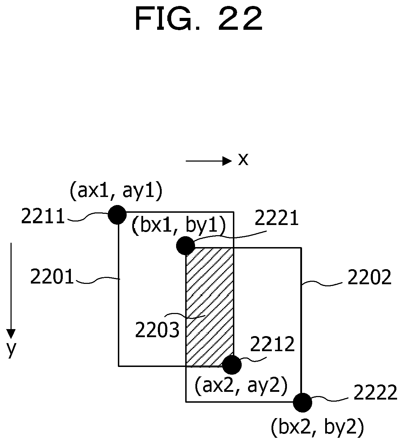

Next, overlap determination processing performed by the video analysis apparatus 303 in FIG. 17 will be described with reference to FIGs. 21 and 22. The overlap determination processing is processing of determining whether or not two persons overlap each other in each frame included in the video. The reliability assignment unit 1711 decreases the tracking reliability for each of two persons to 1/2 every time the two persons overlap each other.

FIG. 21 illustrates an example of a video in which two persons overlap each other. A person 2101 moves to a point R along a movement path 2111, and moves from the point R along a movement path 2112. On the other hand, a person 2102 moves to the point R along a movement path 2121, and moves from the point R along a movement path 2122. The person 2101 and the person 2102 overlap each other at the point R.

Boundary boxes 2131 to 2133 are person tracking frames of the person 2101. Boundary boxes 2141 to 2143 are person tracking frames of the person 2102. At the point R where the person 2101 and the person 2102 overlap each other, the boundary box 2132 and the boundary box 2142 also overlap each other.

Although the tracking reliability assigned to the person 2101 at the position of the boundary box 2131 is 100%, the tracking reliability decreases to 50% at the position of the boundary box 2132 because the person 2101 and the person 2102 overlap each other. Accordingly, the tracking reliability assigned to the person 2101 at the position of the boundary box 2133 is also 50%.

Similarly, although the tracking reliability assigned to the person 2102 at the position of the boundary box 2141 is 100%, the tracking reliability decreases to 50% at the position of the boundary box 2142 because the person 2101 and the person 2102 overlap each other. Accordingly, the tracking reliability assigned to the person 2102 at the position of the boundary box 2143 is also 50%.

In some cases, if the person 2101 and the person 2102 are erroneously recognized at the point R, the person 2101 and the person 2102 are replaced with each other in the following tracking processing. In this case, the movement path 2112 is erroneously associated with the person 2102, and the movement path 2122 is erroneously associated with the person 2101.

FIG. 22 illustrates an example of overlap determination processing using boundary boxes. A boundary box 2201 is a boundary box of one of two persons, and a boundary box 2202 is a boundary box of the other person. An overlap region 2203 represents a portion where the boundary box 2201 and the boundary box 2202 overlap each other.

In the image of each frame, x and y coordinates of a vertex of the boundary box are denoted by (x, y). In the boundary box 2201, the coordinates of an upper left vertex 2211 are denoted by (ax1, ay1) and the coordinates of a lower right vertex 2212 are denoted by (ax2, ay2). In the boundary box 2202, the coordinates of an upper left vertex 2221 are denoted by (bx1, by1) and the coordinates of a lower right vertex 2222 are denoted by (bx2, by2).

The tracking unit 413 calculates a width W and a height H of the overlap region 2203 in accordance with the following expressions using the coordinates of the vertices 2211, 2212, 2221, and 2222.

$$sx = \max(ax1, bx1) \quad (1)$$

$$sy = \max(ay1, by1) \quad (2)$$

$$ex = \min(ax2, bx2) \quad (3)$$

$$ey = \min(ay2, by2) \quad (4)$$

$$W = ex - sx \quad (5)$$

$$H = ey - sy \quad (6)$$

Here, max(a, b) denotes the maximum value of a and b, and min(a, b) denotes the minimum value of a and b. When W is larger than 0 and H is larger than 0, the tracking unit 413 determines that the person represented by the boundary box 2201 and the person represented by the boundary box 2202 overlap each other. When W is equal to or smaller than 0 or H is equal to or smaller than 0, the tracking unit 413 determines that the person represented by the boundary box 2201 and the person represented by the boundary box 2202 do not overlap each other.

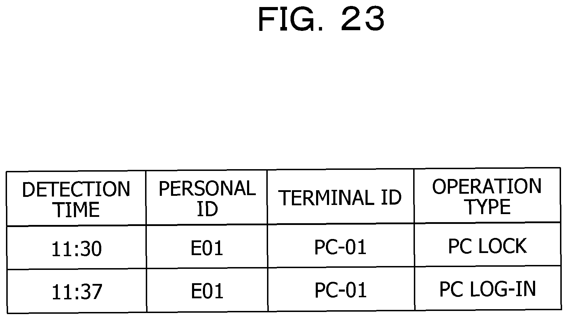

FIG. 23 illustrates an example of a second business log 521 containing an operation history of the person M in the monitoring target region 311 in FIG. 20.

The person M identified by "E01" performs "PC lock" on the terminal device 306-1 identified by "PC-01" at time "11:30 "and performs "PC log-in" on the terminal device 306-1 at time "11:37".

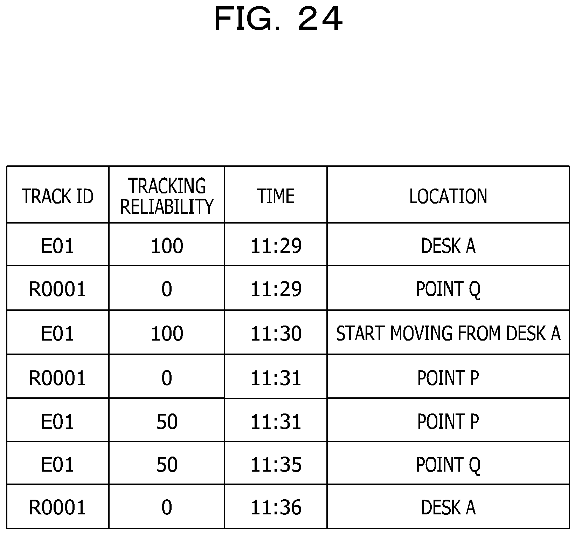

FIG. 24 illustrates an example of a second movement log 1721 containing the tracking reliability for the persons M and L in the monitoring target region 311 in FIG. 20. The movement log 1721 in FIG. 24 indicates an association relationship among the track ID, the tracking reliability, the time, and the location. The tracking reliability decreases every time the person identified by the track ID overlaps another person.

For example, the person "E01" is present at a location "desk A" at time "11:29" and starts moving from the location "desk A" at time "11:30". The person "E01" is present at "point P" at time "11:31" and is present at "point Q" at time "11:35".

The tracking reliability for the person "E01" is 100% at time "11:29" and time "11:30". However, since the person "E01" overlaps the person "R0001" at "point P" at time "11:31", the tracking reliability for the person "E01" decreases to 50% at time "11:31" and time "11:35".

On the other hand, the person "R0001" is present at "point Q" at time "11:29", is present at "point P" at time "11:31", and is present at the location "desk A" at time "11:36". The tracking reliability for the person "R0001" is 0% at time "11:29", time "11:31", and time "11:36".

First, the identification unit 613 searches the business log 521 in FIG. 23 for an entry containing any of the events registered in the event list 621 in FIG. 8 as the operation type, and acquires an entry at a detection time "11:37" containing "PC log-in".

Next, the identification unit 613 extracts the personal ID "E01" and the terminal ID "PC-01" from the entry at the detection time "11:37" acquired from the business log 521, and obtains the location "desk A" associated with "PC-01" by using the location information 622 in FIG. 9.

Next, the identification unit 613 acquires, from the movement log 1721 in FIG. 24, an entry at a predetermined time corresponding to the detection time "11:37 "of the acquired entry, the entry containing "desk A" as the location. When a time immediately before the detection time is used as the predetermined time, an entry at time "11:36" is acquired as the entry at the predetermined time containing "desk A". The identification unit 613 extracts the track ID "R0001" and the tracking reliability "0%" from the entry.

Next, the identification unit 613 compares the extracted tracking reliability "0%" with a predetermined value. For example, when the predetermined value is "60%", the extracted tracking reliability "0%" is lower than the predetermined value. "E01" extracted from the entry in the business log 521 is different from "R0001" extracted from the entry in the movement log 1721.

In this case, the identification unit 613 determines that the person "R0001" present at the location "desk A" at time "11:36" is the same as the person "E01" who performed "PC log-in" at the location "desk A" at the detection time "11:37".

Next, the identification unit 613 obtains time "11:31" at which the person "E01" and the person "R0001" overlapped at the point P in the movement log 1721. The tracking reliability of all the entries in a section from time "11:31" to time "11:36" is lower than "60%". Therefore, the change unit 614 replaces "R0001" and "E01" included in this section with each other.

The track IDs of entries each having the tracking reliability lower than the predetermined value are replaced with each other, which makes it possible to inhibit a correct track ID from being erroneously changed.

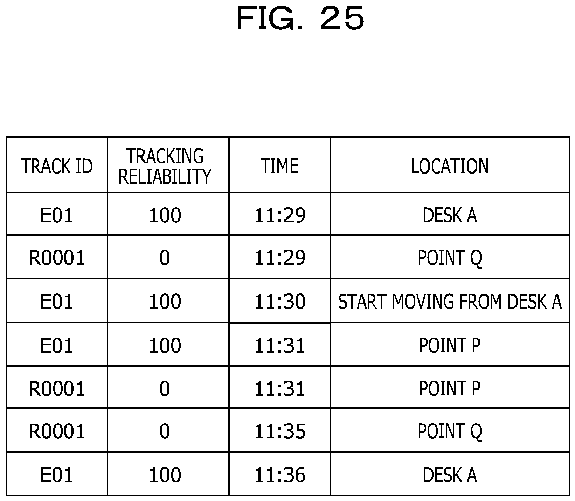

FIG. 25 illustrates an example of a post-replacement second movement log 1721. In the movement log 1721 in FIG. 25, "R0001" at time "11:31" and time "11:36" is changed to "E01", and the tracking reliability thereof is changed to "100%". "E01" at time "11:31" and time "11:35" is changed to "R0001", and the tracking reliability thereof is changed to "0%".

Even in a case where erroneous tracking is performed due to overlapping of two persons in a video, the business process analysis system including the video analysis apparatus 303 in FIG. 17 and the correction apparatus 302 in FIG. 18 is capable of correcting the error and improving the accuracy of the movement log 1721. The business process analysis is performed by using the corrected movement log 1721, which leads to an improvement of the efficiency of the processing of searching for the times and the locations associated with the track IDs of an analysis target.

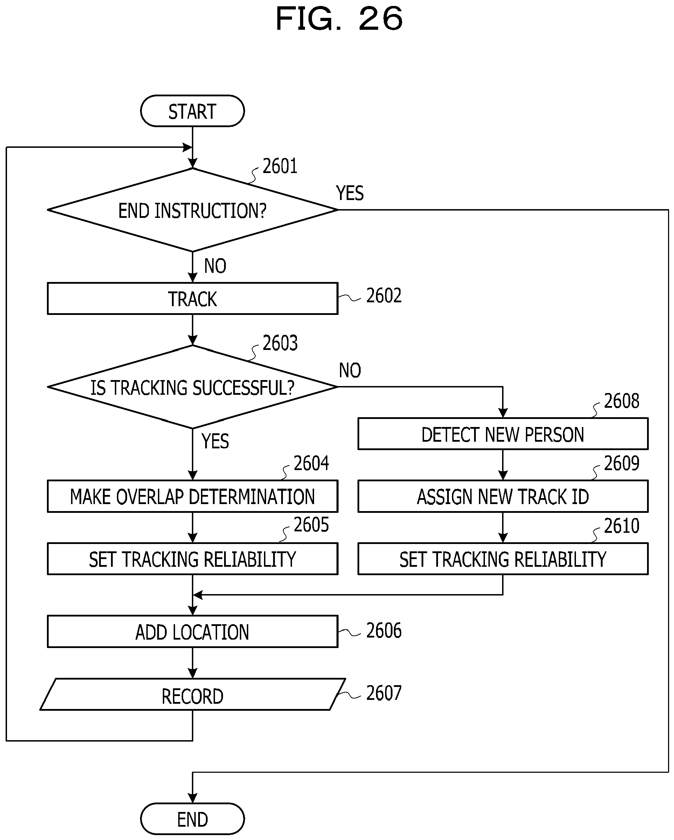

FIG. 26 is a flowchart illustrating an example of second movement log generation processing performed by the video analysis apparatus 303 in FIG. 17. The processing in steps 2601 to 2603, 2606, 2608, and 2609 is the same as the processing in steps 1401 to 1404, 1406, and 1407 in FIG. 14.

If the tracking is successful (step 2603, YES), the tracking unit 413 performs the overlap determination processing on the person identified by the track ID (step 2604), and the reliability assignment unit 1711 sets the tracking reliability for the person in accordance with a result of the overlap determination processing (step 2605). The reliability assignment unit 1711 sets the value of 1/2 of the immediately preceding tracking reliability when the person identified by the track ID overlaps another person, or sets the immediately preceding tracking reliability when the person identified by the track ID does not overlap another person.

Next, the tracking unit 413 adds the name of the location indicated by the ROI that the person enters in the image (step 2606), generates an entry of the person containing the track ID, the tracking reliability, the time, and the location, and records the entry in the movement log 1721 (step 2607).

On the other hand, if the tracking fails (step 2603, NO), the tracking unit 413 detects a new person (step 2608) and assigns a new track ID to the detected person (step 2609). The reliability assignment unit 1711 sets the tracking reliability "0%" for the person (step 2610), and the video analysis apparatus 303 performs the processing in step 2606 and the subsequent step.

The correction apparatus 302 in FIG. 18 performs the same movement log change processing as in FIG. 15 except for step 1505 in FIG. 15 in which the correction apparatus 302 performs location determination processing different from that in FIG. 16.

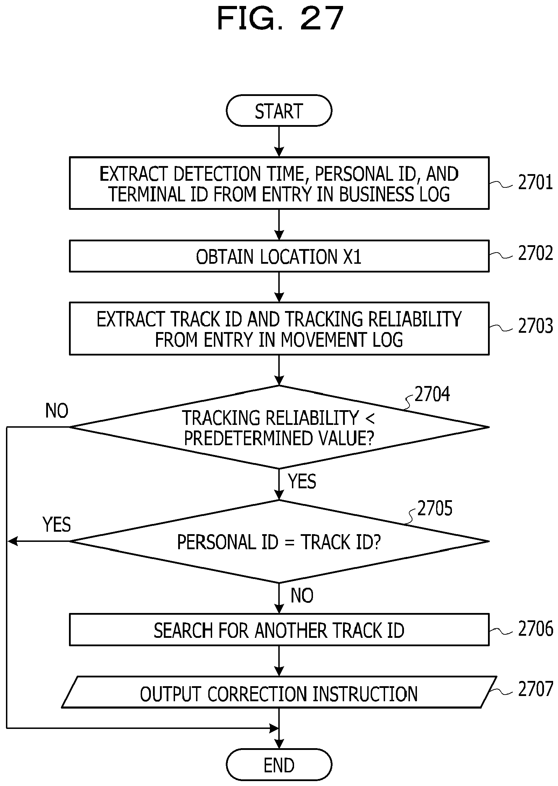

FIG. 27 is a flowchart illustrating an example of second location determination processing performed by the correction apparatus 302 in FIG. 18. The processing in steps 2701 and 2702 is the same as the processing in steps 1601 and 1602 in FIG. 16.

After the processing in step 2702, the identification unit 613 acquires, from the movement log 1721, an entry at a predetermined time corresponding to the detection time of the entry acquired from the business log 521, the entry containing the location X1. The identification unit 613 extracts the track ID and the tracking reliability from the entry (step 2703).

Hereinafter, the track ID extracted from the entry in the movement log 1721 in step 2703 will be referred to as a first track ID.

Next, the identification unit 613 compares the extracted tracking reliability with a predetermined value (step 2704). When the tracking reliability is lower than the predetermined value (step 2704, YES), the identification unit 613 compares the personal ID extracted from the entry in the business log 521 with the first track ID (step 2705).

When the personal ID and the first track ID do not match each other (step 2705, NO), the identification unit 613 determines to correct the movement log 1721. The identification unit 613 searches the movement log 1721 for another track ID associated with the specific location that is the same as that of the first track ID at a specific time T before the first track ID (step 2706).

Hereinafter, the other track ID searched out from the movement log 1721 in step 2706 will be referred to as a second track ID. The person identified by the first track ID and the person identified by the second track ID overlapped each other at the specific time T.

Next, the identification unit 613 confirms that the tracking reliability associated with each of the first track ID and the second track ID contained in a section from the specific time T to the predetermined time is lower than the predetermined value. The identification unit 613 outputs a correction instruction indicating a correction target section and replacement target track IDs to the change unit 614 (step 2707). The correction target section specifies the section from the specific time T to the predetermined time, and the replacement target track IDs specify the first track ID and the second track ID.

When the tracking reliability is equal to or higher than the predetermined value (step 2704, NO), the identification unit 613 determines not to correct the movement log 1721, and ends the processing without outputting the correction instruction. When the personal ID and the track ID match each other (step 2705, YES), the identification unit 613 determines not to correct the movement log 1721, and ends the processing without outputting the correction instruction.

When the correction instruction is output, the change unit 614 corrects the movement log 1721 in step 1507 of FIG. 15 by replacing the first track ID and the second track ID included in the correction target section of the movement log 1721.

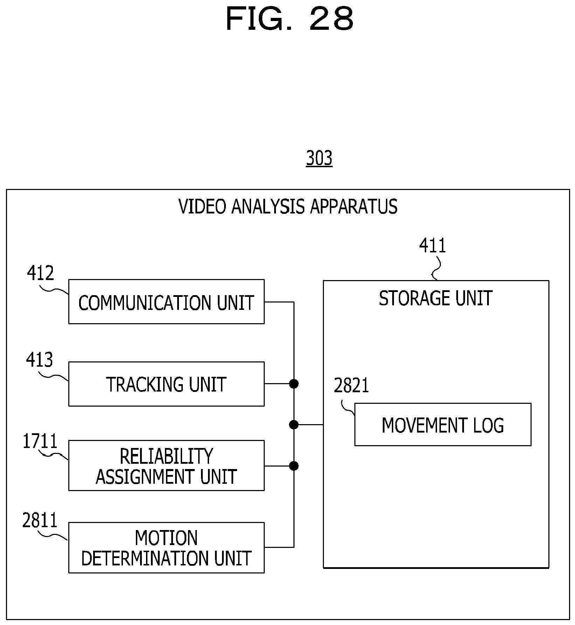

FIG. 28 illustrates a third functional configuration example of the video analysis apparatus 303 in FIG. 3. The video analysis apparatus 303 in FIG. 28 has a configuration in which a motion determination unit 2811 is added to the video analysis apparatus 303 in FIG. 17.

The motion determination unit 2811 determines a motion of the person tracked at each time in a video by using, for example, a learned model generated by machine learning. The learned model may be a support vector machine (SVM) for recognizing skeleton shapes. The motion of the person means, for example, walking, standing, being-seated, or the like.

The tracking unit 413 generates a movement log 2821 containing the motion of the person and stores the movement log 2821 in the storage unit 411. Each entry in the movement log 2821 contains the track ID, the tracking reliability, the motion of a person, the time, and the location.

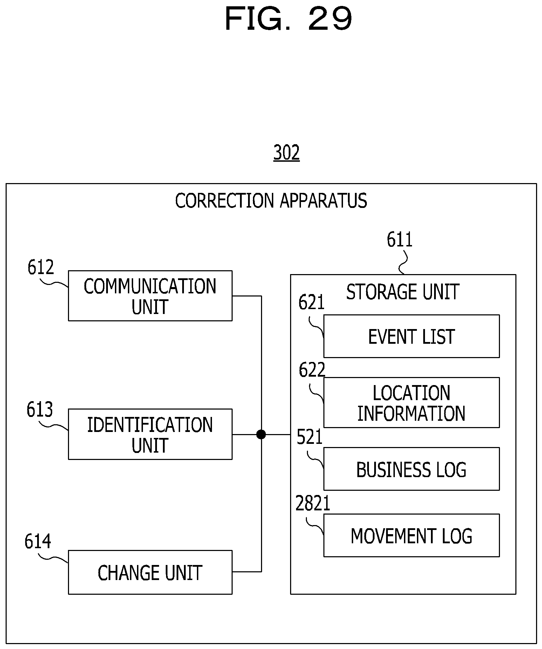

FIG. 29 illustrates a third functional configuration example of the correction apparatus 302 in FIG. 3. The correction apparatus 302 in FIG. 29 has the same configuration as that of the correction apparatus 302 in FIG. 6. The storage unit 611 stores the movement log 2821 in FIG. 28 instead of the movement log 421 in FIG. 6. The identification unit 613 and the change unit 614 perform the movement log change processing using the movement log 2821.

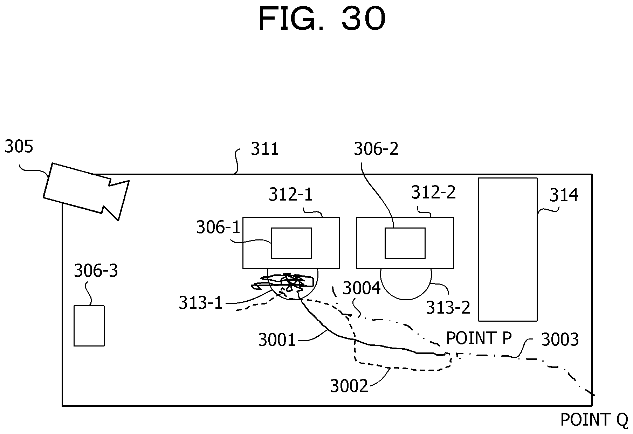

FIG. 30 illustrates an example of two persons moving together in the monitoring target region 311 in FIG. 3. A solid line 3001 indicates a movement path along which a person M who works using the terminal device 306-1 on the desk 312-1 temporarily leaves the desk 312-1 and moves to a point P. A broken line 3002 indicates a movement path along which the person M returns to the desk 312-1 together with a person L after having conversations with the person L at the point P.

A dashed-dotted line 3003 indicates a movement path along which the person L moves from the point Q to the point P. A dashed-two dotted line 3004 indicates a movement path along which the person L moves to the desk 312-1 together with the person M after having conversations with the person M at the point P.

In this case, since the person M and the person L overlap each other at the point P, the tracking reliability for the person M and the person L decreases, and it is erroneously determined that the person M moves along the movement path indicated by the dashed-two dotted line 3004 and the person L moves along the movement path indicated by the broken line 3002.

The business log 521 containing an operation history of the person M in the monitoring target region 311 in FIG. 30 is the same as the business log 521 in FIG. 23.

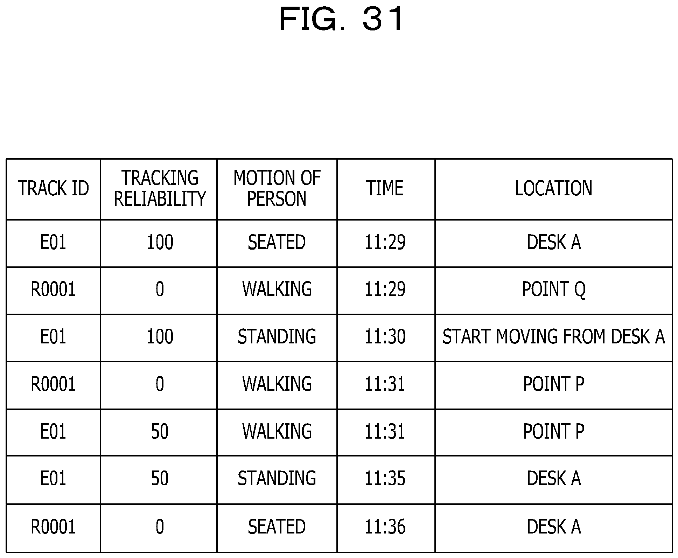

FIG. 31 illustrates an example of a third movement log 2821 containing the tracking reliability for the persons M and L in the monitoring target region 311 in FIG. 30. The movement log 2821 in FIG. 31 specifies an association relationship among the track ID, the tracking reliability, the motion of a person, the time, and the location. The motion of a person is an example of motion information of an object.

For example, the person "E01" is seated at a location "desk A" at time "11:29", and stands up and starts moving from the location "desk A" at time "11:30". The person "E01" is walking at "point P" at time "11:31" and is standing at the location "desk A" at time "11:35".

The tracking reliability for the person "E01" is 100% at time "11:29" and time "11:30". However, since the person "E01" overlaps the person "R0001" at "point P" at time "11:31", the tracking reliability for the person "E01" decreases to 50% at time "11:31" and time "11:35".

On the other hand, the person "R0001" is walking at "point Q" at time "11:29", is walking at "point P" at time "11:31" and is seated at the location "desk A" at time "11:36". The tracking reliability for the person "R0001" is 0% at time "11:29", time "11:31", and time "11:36".

First, the identification unit 613 searches the business log 521 in FIG. 23 for an entry containing any of the events registered in the event list 621 in FIG. 8 as the operation type, and acquires an entry at a detection time "11:37" containing "PC log-in".

Next, the identification unit 613 extracts the personal ID "E01", the terminal ID "PC-01", and the operation type "PC log-in" from the entry at the detection time "11:37" acquired from the business log 521. The identification unit 613 obtains the location "desk A" associated with "PC-01" by using the location information 622 in FIG. 9.

Next, the identification unit 613 acquires, from the movement log 2821 in FIG. 31, an entry at a predetermined time corresponding to the detection time "11:37" of the acquired entry, the entry containing "desk A" as the location. When a time immediately before the detection time is used as the predetermined time, an entry at time "11:36" is acquired as the entry at the predetermined time containing "desk A". The identification unit 613 extracts the track ID "R0001", the tracking reliability "0%", and the motion of the person "seated" from the entry.

Since one usually performs a log-in operation in a seated state, "PC log-in" extracted from the entry in the business log 521 indicates that an expected motion at "desk A" is to be "seated". Therefore, "seated" extracted from the entry in the movement log 2821 agrees with the expected motion at "desk A".

Next, the identification unit 613 compares the extracted tracking reliability "0%" with a predetermined value. For example, when the predetermined value is "60%", the extracted tracking reliability "0%" is lower than the predetermined value. "E01" extracted from the entry in the business log 521 is different from "R0001" extracted from the entry in the movement log 2821. Then, "seated" extracted from the entry in the movement log 2821 agrees with the motion of the person who performed "PC log-in" extracted from the entry in the business log 521.

In this case, the identification unit 613 determines that the person "R0001" who was seated at the location "desk A" at time "11:36" is the same as the person "E01" who performed "PC log-in" at the location "desk A" at the detection time "11:37".

Next, the identification unit 613 obtains time "11:31" at which the person "E01" and the person "R0001" overlap each other at the point P in the movement log 2821. The tracking reliability of all the entries in a section from time "11:31" to time "11:36" is lower than "60%". Therefore, the change unit 614 replaces "R0001" and "E01" included in this section with each other.

The track IDs of entries each having the tracking reliability lower than the predetermined value are replaced with each other, which makes it possible to inhibit a correct track ID from being erroneously changed. A motion of a person recorded in the movement log 2821 is compared with a motion of a person presumed from the business log 521, which makes it possible to accurately determine whether or not the two persons are the same person.

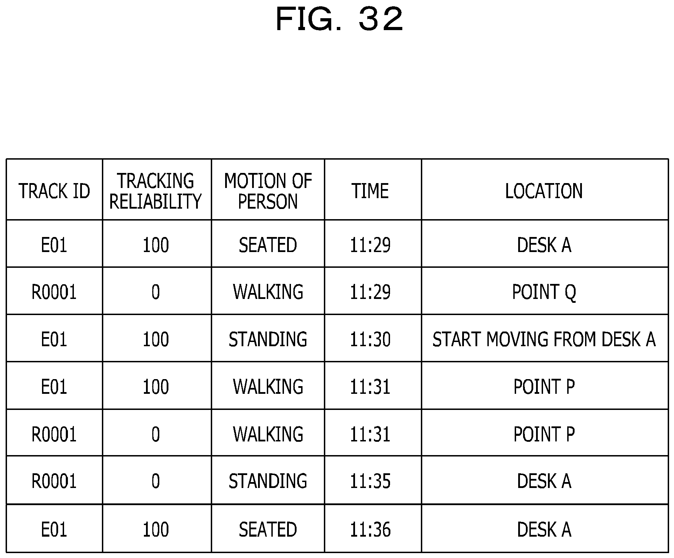

FIG. 32 illustrates an example of a post-replacement third movement log 2821. In the movement log 2821 in FIG. 32, "R0001" at time "11:31" and time "11:36" is changed to "E01" and the tracking reliability thereof is changed to "100%". "E01" at time "11:31" and time "11:35" is changed to "R0001", and the tracking reliability thereof is changed to "0%".

Even in a case where two persons in a video are erroneously tracked because they move together, the business process analysis system including the video analysis apparatus 303 in FIG. 28 and the correction apparatus 302 in FIG. 29 is capable of correcting the error and improving the accuracy of the movement log 2821. The business process analysis is performed by using the corrected movement log 2821, which leads to an improvement of the efficiency of the processing of searching for the times and the locations associated with the track IDs of an analysis target.

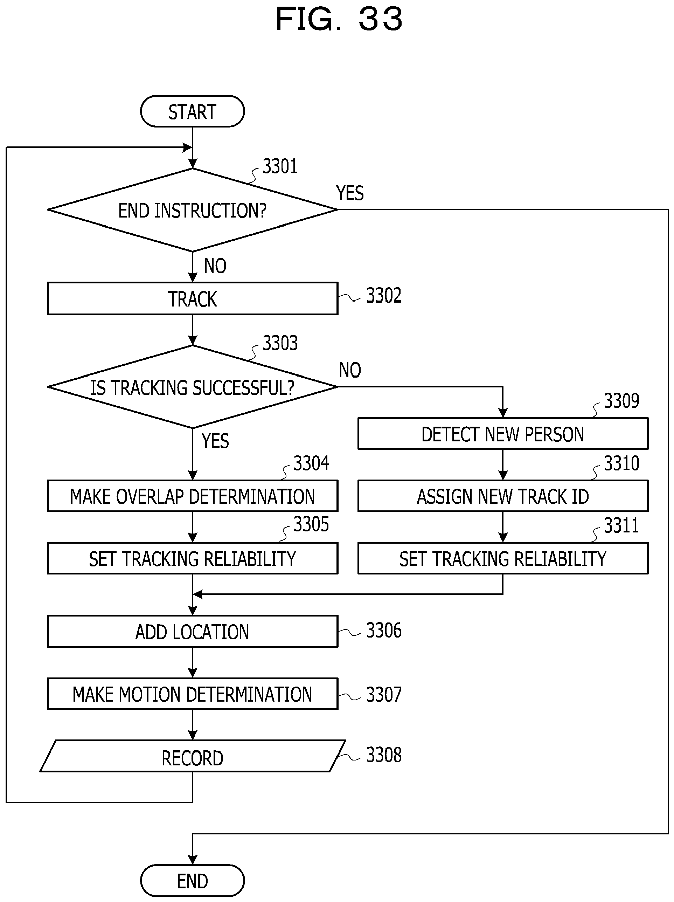

FIG. 33 is a flowchart illustrating an example of third movement log generation processing performed by the video analysis apparatus 303 in FIG. 28. The processing in steps 3301 to 3306 and 3309 to 3311 is the same as the processing in steps 2601 to 2606 and 2608 to 2610 in FIG. 26.

After the processing in step 3306, the tracking unit 413 determines what motion the person makes (step 3307). The tracking unit 413 generates an entry of the person containing the track ID, the tracking reliability, the motion of the person, the time, and the location and records the entry in the movement log 2821 (step 3308).

The correction apparatus 302 in FIG. 29 performs the same movement log change processing as in FIG. 15 except for step 1505 in FIG. 15 in which the correction apparatus 302 performs location determination processing different from that in FIG. 16.

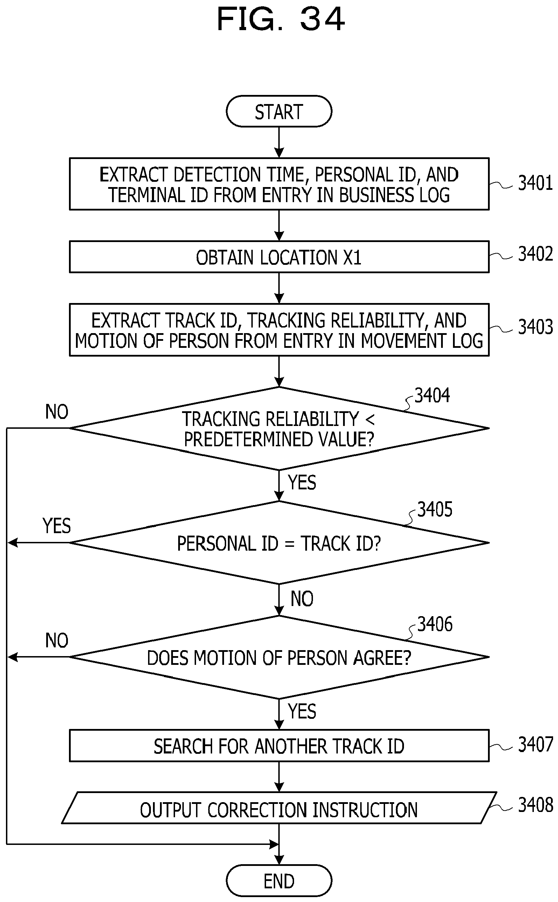

FIG. 34 is a flowchart illustrating an example of third location determination processing performed by the correction apparatus 302 in FIG. 29. The processing in steps 3401, 3402, 3404, 3405, 3407, and 3408 is the same as the processing in steps 2701, 2702 and 2704 to 2707 in FIG. 27.

After the processing in step 3402, the identification unit 613 acquires, from the movement log 2821, an entry at a predetermined time corresponding to the detection time of the entry acquired from the business log 521, the entry containing the location X1. The identification unit 613 extracts the track ID, the tracking reliability, and the motion of the person from the entry (step 3403).

When the personal ID and the first track ID do not match each other in step 3405 (step 3405, NO), the identification unit 613 performs the processing in step 3406. In step 3406, the identification unit 613 checks whether the motion of the person extracted from the entry in the movement log 2821 agrees with the motion of the person who performed the operation of the operation type extracted from the entry in the business log 521.

The motion of the person who performed the operation of the operation type extracted from the entry in the business log 521 is an example of a motion expected at the predetermined location.

When the extracted motion of the person agrees with the motion of the person who performed the operation of the operation type extracted from the entry in the business log 521 (step 3406, YES), the identification unit 613 determines to correct the movement log 2821. The identification unit 613 performs the processing in step 3407 and the subsequent step.

When the extracted motion of the person does not agree with the motion of the person who performed the operation of the operation type extracted from the entry in the business log 521 (step 3406, NO), the identification unit 613 determines not to correct the movement log 2821, and ends the processing without outputting the correction instruction.

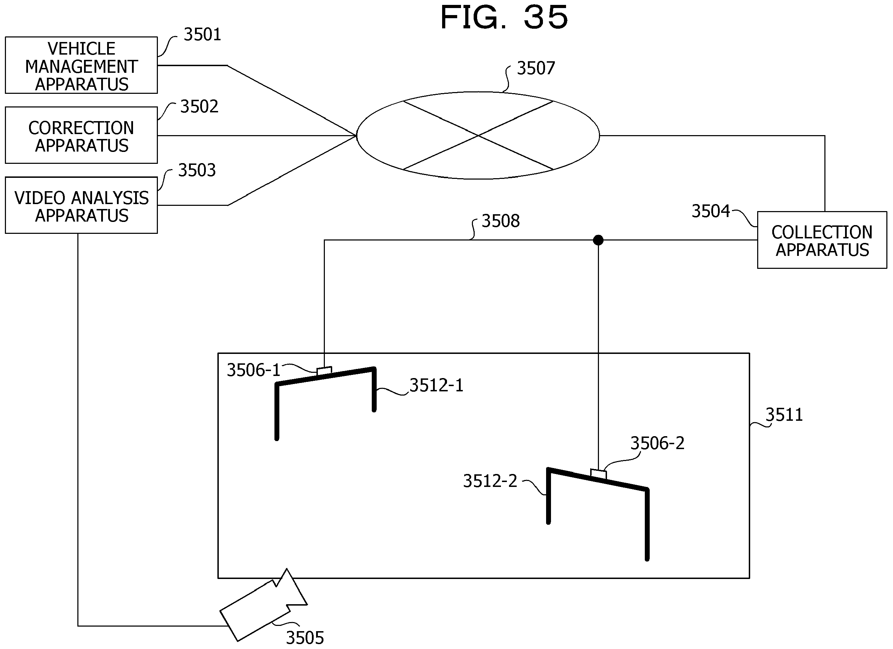

FIG. 35 illustrates a configuration example of a vehicle management system including the movement history change apparatus 101 in FIG. 1. The vehicle management system in FIG. 35 includes a vehicle management apparatus 3501, a correction apparatus 3502, a video analysis apparatus 3503, a collection apparatus 3504, an imaging apparatus 3505, a vehicle detection apparatus 3506-1, and a vehicle detection apparatus 3506-2. The correction apparatus 3502 corresponds to the movement history change apparatus 101 in FIG. 1.

The vehicle management apparatus 3501, the correction apparatus 3502, the video analysis apparatus 3503, and the collection apparatus 3504 are able to communicate with each other via a communication network 3507. The communication network 3507 is a LAN or a WAN.

A monitoring target region 3511 is a space where vehicles move. The monitoring target region 3511 may be a region within a site such as a factory or an airport. Gates 3512-1 and 3512-2 are installed in the monitoring target region 3511, and the vehicle detection apparatus 3506-i is attached to the gate 3512-i (i = 1, 2).

The vehicle detection apparatuses 3506-1 and 3506-2 are examples of sensors. Three or more vehicle detection apparatuses 3506-i may be installed in the monitoring target region 3511.

The imaging apparatus 3505 is, for example, a camera having an imaging device such as a CCD or CMOS, captures a video of the monitoring target region 3511, and outputs the captured video to the video analysis apparatus 3503.

The video analysis apparatus 3503 analyzes the video output from the imaging apparatus 3505 and generates a movement log indicating a movement path of an object captured in the video. The video analysis apparatus 3503 transmits the movement log to the correction apparatus 3502. The object captured in the video is, for example, a vehicle, and the movement log is an example of the object movement history information 122.

The collection apparatus 3504 and the vehicle detection apparatuses 3506-i are able to communicate with each other via a communication network 3508. The communication network 3508 is a LAN or a WAN.

The vehicle detection apparatus 3506-i detects a vehicle passing through the gate 3512-i and transmits a detection time, a detected incident, and information on the detected vehicle to the collection apparatus 3504. For example, the vehicle detection apparatus 3506-i captures the vehicle at a short distance with an imaging apparatus to acquire an image of the number plate, and transmits the acquired image as the information on the vehicle to the collection apparatus 3504.

The collection apparatus 3504 identifies identification information of the vehicle and a vehicle type thereof from the information on the vehicle received from the vehicle detection apparatus 3506-i. The identification information of the vehicle is, for example, a vehicle registration number displayed on the number plate. The vehicle type is an example of type information specifying the type of an object. The collection apparatus 3504 generates a detection log containing the detection time, the identification information of the vehicle, the vehicle type, and the detected incident and transmits the detection log to the correction apparatus 3502. The detection log is an example of the object detection history information 121.

The correction apparatus 3502 corrects the movement log received from the video analysis apparatus 3503 by using the detection log received from the collection apparatus 3504, and transmits the corrected movement log to the vehicle management apparatus 3501. The vehicle management apparatus 3501 analyzes the operation status of the vehicle by using the movement log received from the correction apparatus 3502, and outputs an analysis result.

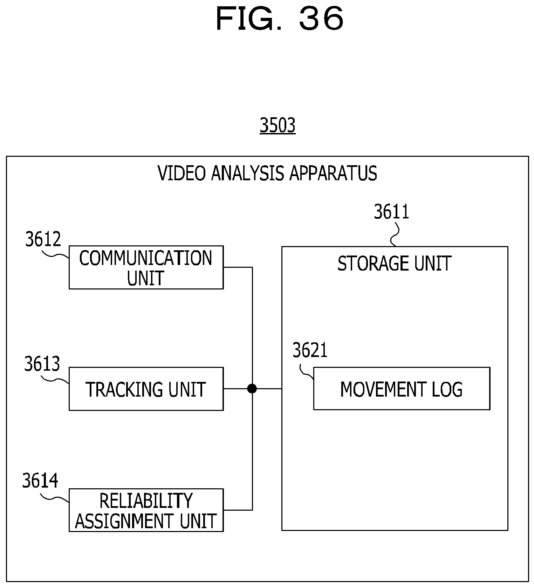

FIG. 36 illustrates a functional configuration example of the video analysis apparatus 3503 in FIG. 35. The video analysis apparatus 3503 in FIG. 36 includes a storage unit 3611, a communication unit 3612, a tracking unit 3613, and a reliability assignment unit 3614. The communication unit 3612 receives a video of the monitoring target region 3511 from the imaging apparatus 3505.

The tracking unit 3613 tracks the vehicle captured in the video, and the reliability assignment unit 3614 assigns the tracking reliability to the vehicle tracked at each time. For example, the tracking unit 3613 is able to track a vehicle in a video by recognizing the vehicle type of the vehicle by use of a learned model, such as a single shot multibox detector (SSD), generated by machine learning.

The tracking unit 3613 generates a movement log 3621 indicating a movement path of the vehicle and stores the movement log 3621 in the storage unit 3611. Each entry in the movement log 3621 contains the track ID, the tracking reliability, the time, the vehicle type, and the location. The communication unit 3612 transmits the generated movement log 3621 to the correction apparatus 3502.

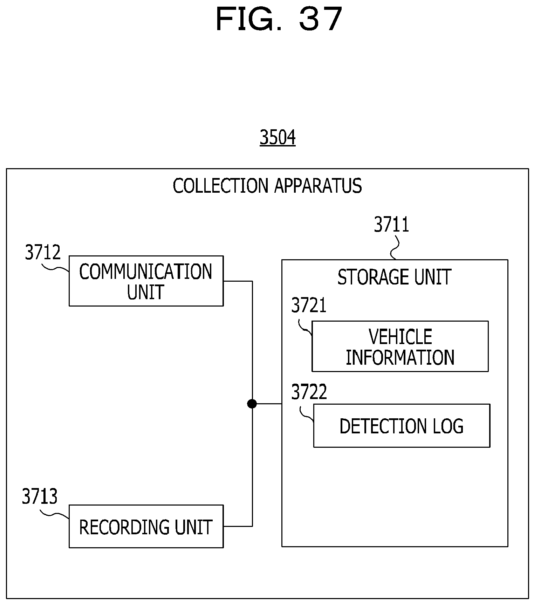

FIG. 37 illustrates a functional configuration example of the collection apparatus 3504 in FIG. 35. The collection apparatus 3504 in FIG. 37 includes a storage unit 3711, a communication unit 3712, and a recording unit 3713. The communication unit 3712 receives the detection time, the detected incident, and the information on the vehicle from the vehicle detection apparatus 3506-i. The storage unit 3711 stores vehicle information 3721. The vehicle information 3721 is information in which the identification information of a vehicle is associated with the vehicle type.

When the information on the vehicle contains the image of the number plate, the recording unit 3713 recognizes the vehicle registration number from the image of the number plate and acquires the vehicle registration number as the identification information of the vehicle. The recording unit 3713 acquires the vehicle type associated with the acquired identification information of the vehicle from the vehicle information 3721, generates a detection log 3722, and stores the detection log 3722 in the storage unit 3711. Each entry in the detection log 3722 contains the detection time, the vehicle identification information, the vehicle type, and the detected incident. The communication unit 3712 transmits the generated detection log 3722 to the correction apparatus 3502.

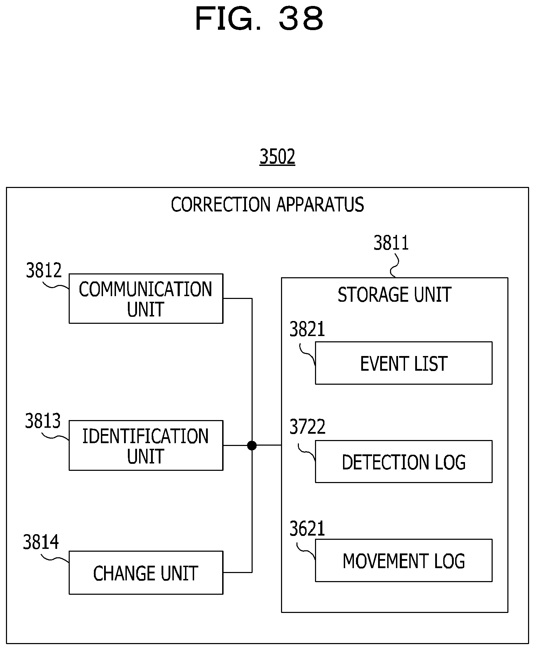

FIG. 38 illustrates a functional configuration example of the correction apparatus 3502 in FIG. 35. The correction apparatus 3502 in FIG. 38 includes a storage unit 3811, a communication unit 3812, an identification unit 3813, and a change unit 3814. The storage unit 3811, the identification unit 3813, and the change unit 3814 correspond to the storage unit 111, the identification unit 112, and the change unit 113 in FIG. 1, respectively.

The communication unit 3812 receives the detection log 3722 from the collection apparatus 3504 and receives the movement log 3621 from the video analysis apparatus 3503. The identification unit 3813 stores the received detection log 3722 and movement log 3621 in the storage unit 3811.

The storage unit 3811 stores an event list 3821. The event list 3821 is a list of events each indicating a detected incident usable for determining a location included in the movement log 3621 among detected incidents to be contained in the detection log 3722.

The identification unit 3813 acquires the identification information of a first vehicle, the vehicle type, the detection time, and the detected incident from the detection log 3722 based on the events contained in the event list 3821. In the movement log 3621, the identification unit 3813 identifies the identification information of a second vehicle present at a predetermined location involved in the detected incident at a predetermined time corresponding to the detection time of the first vehicle.

The change unit 3814 corrects the movement log 3621 by changing the identified identification information of the second vehicle to the acquired identification information of the first vehicle in the movement log 3621. The communication unit 3812 transmits the corrected movement log 3621 to the vehicle management apparatus 3501.

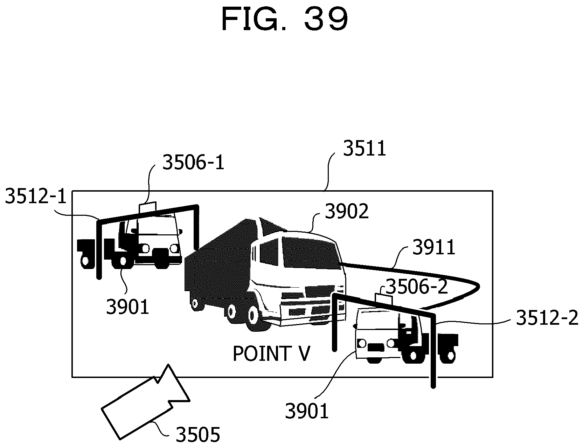

FIG. 39 illustrates an example of vehicles moving in the monitoring target region 3511 in FIG. 35. A vehicle 3901 is of a vehicle type "A", and a vehicle 3902 is of a vehicle type "B". The body of the vehicle type "A" is smaller than the body of the vehicle type "B". The vehicle 3902 is stopped at a point V, and the vehicle 3901 moves along a movement path 3911 from the gate 3512-1 to the gate 3512-2.

In the video of the imaging apparatus 3505, the vehicle 3901 passing through the gate 3512-1 is seen in a predetermined region around the vehicle detection apparatus 3506-1. The vehicle 3901 passing through the gate 3512-2 is seen in a predetermined region around the vehicle detection apparatus 3506-2.

When viewed from the imaging apparatus 3505, the vehicle 3901 passes behind the vehicle 3902 at the point V and therefore is temporarily hidden in the video of the imaging apparatus 3505. As a result, the tracking is interrupted. When the vehicle 3901 appears on the right side of the vehicle 3902, a new track ID is assigned to the vehicle 3901.

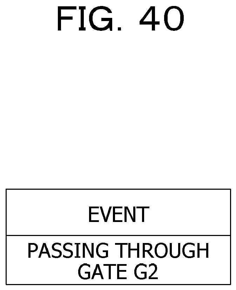

FIG. 40 illustrates an example of the event list 3821 illustrated in FIG. 38. An event contained in the event list 3821 in FIG. 40 is "passing through gate G2". Here, "gate G2" denotes the name of the gate 3512-2.

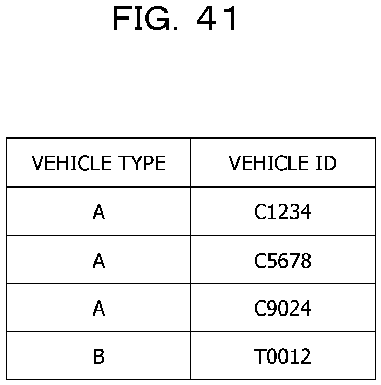

FIG. 41 illustrates an example of the vehicle information 3721 in FIG. 37. The vehicle information 3721 in FIG. 41 specifies an association relationship between the vehicle type and a vehicle ID. The vehicle ID is identification information of a vehicle. For example, "C1234" is the identification information of the vehicle 3901 and "T0012" is the identification information of the vehicle 3902.

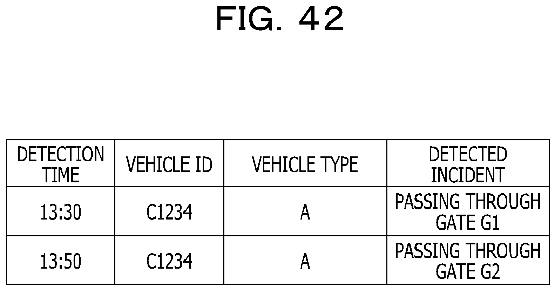

FIG. 42 illustrates an example of the detection log 3722 containing the detection history of the vehicle 3901 in the monitoring target region 3511 in FIG. 39. The detection log 3722 illustrated in FIG. 42 indicates an association relationship among the detection time, the vehicle ID, the vehicle type, and the detected incident.

The detection time specifies a time at which the vehicle identified by the vehicle ID was detected by the vehicle detection apparatus 3506-i, and the detected incident specifies what work was done using the detected vehicle. As the detected incident, "passing through gate", "loading work to aircraft", or the like is recorded.

The vehicle 3901 identified by "C1234" passes through "gate G1" at time "13:30" and passes through "gate G2" at time "13:50". Here, "gate G1" denotes the name of the gate 3512-1.

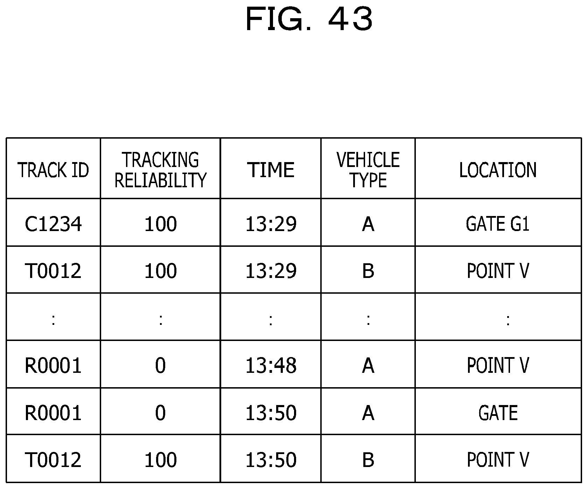

FIG. 43 illustrates an example of the movement log 3621 containing the movement paths of the two vehicles in the monitoring target region 3511 in FIG. 39. The movement log 3621 in FIG. 43 specifies an association relationship among the track ID, the tracking reliability, the time, and the location. The tracking reliability decreases every time the vehicle identified by the track ID overlaps another vehicle.

For example, the vehicle "C1234" is present at "gate G1" at time "13:29". The tracking reliability for the vehicle "C1234" is 100% at time "13:29". The vehicle "T0012" is present at "point V" at time "13:29" and time "13:50". The tracking reliability for the vehicle "T0012" is 100% at time "13:29" and time "13:50".

The vehicle "R0001" is present at "point V" at time "13:48" and is present at "gate G2" at time "13:50". The tracking reliability for the vehicle "R0001" is 0% at time "13:48" and time "13:50".

First, the identification unit 3813 searches the detection log 3722 in FIG. 42 for an entry containing, as the detected incident, any of the events registered in the event list 3821 in FIG. 40, and acquires an entry at a detection time "13:50" containing "passing through gate G2".

Next, the identification unit 3813 extracts the vehicle ID "C1234", the vehicle type "A", and the detected incident "passing through gate G2" from the entry at the detection time "13:50" acquired from the detection log 3722.

Next, the identification unit 3813 acquires, from the movement log 3621 in FIG. 43, an entry at a predetermined time corresponding to the detection time "13:50 "of the acquired entry, the entry containing, as the location, "gate G2" involved in the detected incident. In this example, an entry at time "13:50" having the track ID "R0001" is acquired as the entry at the predetermined time containing "gate G2". The identification unit 3813 extracts the track ID "R0001", the tracking reliability "0%", and the vehicle type "A" from the entry.

Next, the identification unit 3813 compares the extracted tracking reliability "0%" with a predetermined value. For example, when the predetermined value is "60%", the extracted tracking reliability "0%" is lower than the predetermined value. "C1234" extracted from the entry in the detection log 3722 is different from "R0001" extracted from the entry in the movement log 3621. Meanwhile, the vehicle type "A" extracted from the entry in the detection log 3722 matches the vehicle type "A" extracted from the entry in the movement log 3621.

In this case, the identification unit 3813 determines that the vehicle "R0001" which was present at "gate G2" at time "13:50" is the same as the vehicle "C1234" which passed through "gate G2" at the detection time "13:50".

Next, the identification unit 3813 obtains a section in the movement log 3621 in which the tracking reliability for the vehicle "R0001" is lower than the predetermined value in a time range before or at time "13:50", and the change unit 3814 changes "R0001" in the section to "C1234".

The track IDs of entries having the tracking reliability lower than the predetermined value are selected as the change targets, which makes it possible to inhibit a correct track ID from being erroneously changed. The vehicle type recorded in the movement log 3621 is compared with the vehicle type recorded in the detection log 3722, which makes it possible to accurately determine whether or not two vehicles are the same vehicle.

The tracking reliability of each of the entries at time "13:48" and time "13:50" containing "R0001" is lower than "60%". Therefore, the change unit 3814 changes "R0001" contained in these entries to "C1234". When "R0001" is contained in an entry after time "13:50", "R0001" of the entry is also changed to "C1234" .

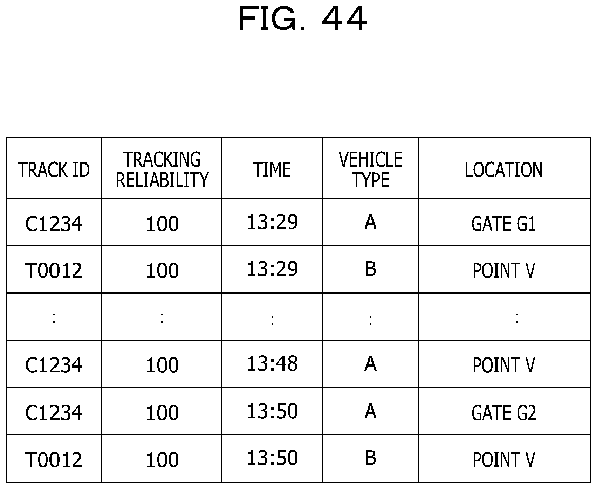

FIG. 44 illustrates an example of a post-change movement log 3621. In the movement log 3621 in FIG. 44, "R0001" at time "13:48" and time "13:50" is changed to "C1234" and the tracking reliability thereof is changed to "100%".

The vehicle management apparatus 3501 searches the movement log 3621 in FIG. 44 for the times and locations associated with the track IDs "C1234" of the analysis target, and generates a movement path of the vehicle 3901 including the searched-out times and locations. Then, based on the generated movement path, the vehicle management apparatus 3501 detects a bottleneck in the work performed using the vehicle 3901 and optimizes an operation schedule of the vehicle 3901.

Even in a case where the tracking of a vehicle in a video is interrupted because the vehicle is hidden, the vehicle management system in FIG. 35 is capable of correcting an error and improving the accuracy of the movement log 3621. The operation status is analyzed by using the corrected movement log 3621, which leads to an improvement of the efficiency of the processing of searching for the times and the locations associated with the track IDs of an analysis target.

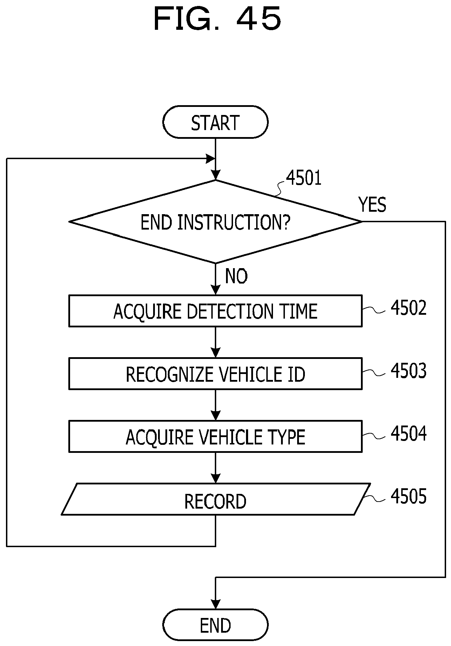

FIG. 45 is a flowchart illustrating an example of detection log generation processing performed by the collection apparatus 3504 in FIG. 37. First, the recording unit 3713 checks whether an end instruction is input from a user (step 4501).

When the end instruction is not input (step 4501, NO), the recording unit 3713 acquires, via the communication unit 3712, the detection time and the detected incident of a vehicle detected by any of the vehicle detection apparatuses 3506-i, and the information on the vehicle (step 4502). The recording unit 3713 recognizes the vehicle ID from the information on the vehicle (step 4503), and acquires the vehicle type associated with the recognized vehicle ID from the vehicle information 3721 (step 4504).

Next, the recording unit 3713 generates an entry containing the detection time, the vehicle ID, the vehicle type, and the detected incident and records the entry in the detection log 3722 (step 4505). The recording unit 3713 iterates the processing in step 4501 and the subsequent steps. When the end instruction is input (step 4501, YES), the recording unit 3713 ends the processing.

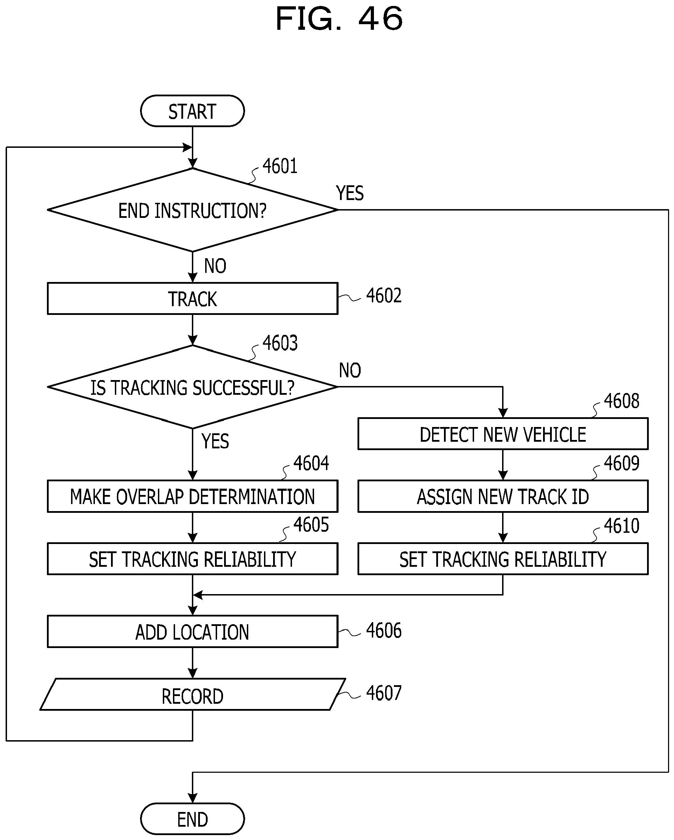

FIG. 46 is a flowchart illustrating an example of fourth movement log generation processing performed by the video analysis apparatus 3503 in FIG. 36. First, the tracking unit 3613 checks whether an end instruction is input from a user (step 4601).

When the end instruction is not input (step 4601, NO), the tracking unit 3613 tracks a vehicle captured in a video while recognizing the vehicle type of the vehicle (step 4602), and checks whether the tracking is successful (step 4603).

If the tracking is successful (step 4603, YES), the tracking unit 3613 performs overlap determination processing on the vehicle identified by the track ID (step 4604), and the reliability assignment unit 3614 sets the tracking reliability for the vehicle in accordance with a result of the overlap determination processing (step 4605). The reliability assignment unit 3614 sets the value of 1/2 of the immediately preceding tracking reliability when the vehicle identified by the track ID overlaps another vehicle or sets the immediately preceding tracking reliability when the vehicle identified by the track ID does not overlap another vehicle.

Next, the tracking unit 3613 adds the name of a location indicated by the ROI that the vehicle enters in the image (step 4606), generates an entry of the vehicle containing the track ID, the tracking reliability, the time, the vehicle type, and the location, and records the entry in the movement log 3621 (step 4607). The video analysis apparatus 3503 iterates the processing in step 4601 and the subsequent steps.

On the other hand, when the tracking fails (step 4603, NO), the tracking unit 3613 detects a new vehicle (step 4608) and recognizes the vehicle type of the detected vehicle. The tracking unit 3613 assigns a new track ID to the detected vehicle (step 4609).

Next, the reliability assignment unit 3614 sets the tracking reliability "0%" for the vehicle (step 4610), and the video analysis apparatus 3503 performs the processing in step 4606 and the subsequent step. When the end instruction is input (step 4601, YES), the video analysis apparatus 3503 ends the processing.

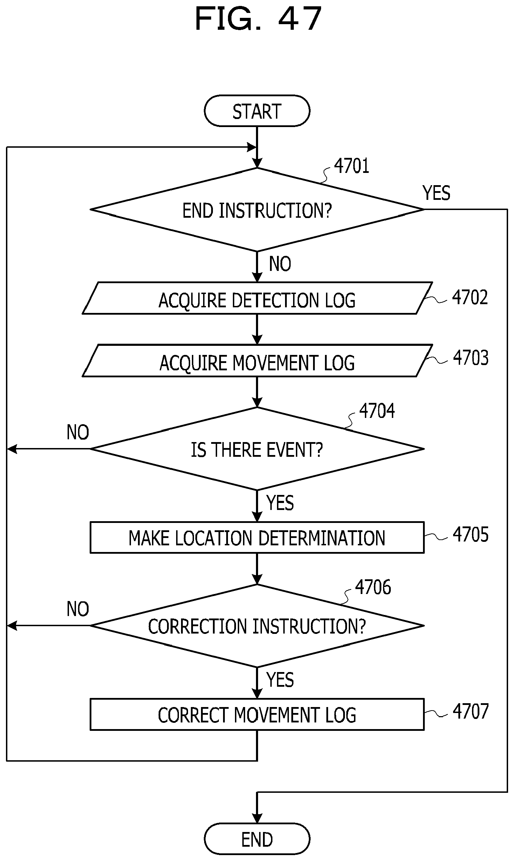

FIG. 47 is a flowchart illustrating an example of second movement log change processing performed by the correction apparatus 3502 in FIG. 38. First, the identification unit 3813 checks whether an end instruction is input from a user (step 4701).

When the end instruction is not input (step 4701, NO), the identification unit 3813 acquires, via the communication unit 3812, the detection log 3722 from the collection apparatus 3504 (step 4702) and the movement log 3621 from the video analysis apparatus 3503 (step 4703). The identification unit 3813 searches the acquired detection log 3722 for a detected incident indicating any of the events registered in the event list 3821 and thereby checks whether the detection log 3722 contains an event (step 4704).

When the detection log 3722 contains an event (YES in step 4704), the identification unit 3813 makes location determination to determine whether to correct the acquired movement log 3621 (step 4705). When determining to correct the movement log 3621, the identification unit 3813 outputs a correction instruction indicating the track ID of the change target and the post-change track ID to the change unit 3814.

Next, the change unit 3814 checks whether the correction instruction is output from the identification unit 3813 (step 4706). When the correction instruction is output (step 4706, YES), the change unit 3814 corrects the movement log 3621 by changing the track ID of the change target specified in the correction instruction to the post-change track ID specified therein in the movement log 3621 (step 4707). The correction apparatus 3502 iterates the processing in step 4701 and the subsequent steps.

When the detection log 3722 contains no event (step 4704, NO), the correction apparatus 3502 iterates the processing in step 4701 and the subsequent steps. When the correction instruction is not output (step 4706, NO), the correction apparatus 3502 iterates the processing in step 4701 and the subsequent steps. When the end instruction is input (step 4701, YES), the correction apparatus 3502 ends the processing.

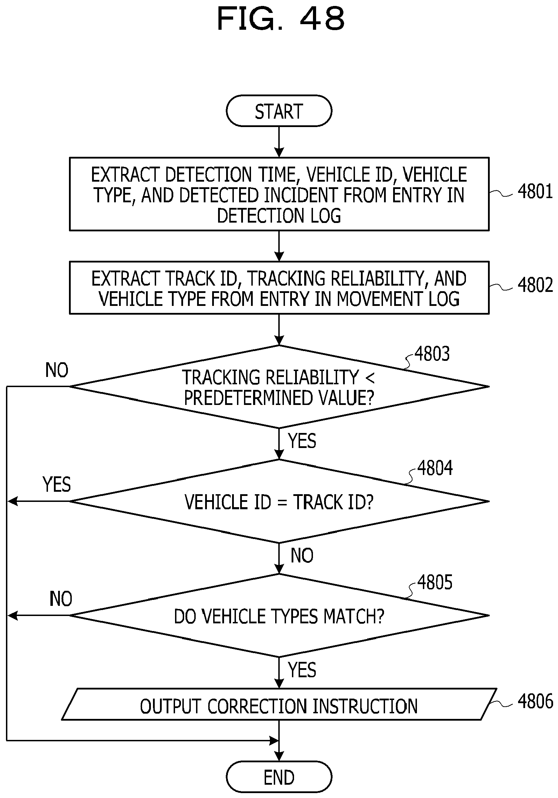

FIG. 48 is a flowchart illustrating an example of fourth location determination processing in step 4705 in FIG. 47. First, the identification unit 3813 acquires an entry containing an event as the detected incident from the detection log 3722, and extracts the detection time, the vehicle ID, the vehicle type, and the detected incident from the entry (step 4801).

Next, the identification unit 3813 acquires, from the movement log 3621, an entry at a predetermined time corresponding to the detection time extracted from the entry in the detection log 3722, the entry containing the location involved in the detected incident. The identification unit 3813 extracts the track ID, the tracking reliability, and the vehicle type from the entry (step 4802).

Next, the identification unit 3813 compares the extracted tracking reliability with a predetermined value (step 4803). When the tracking reliability is lower than the predetermined value (step 4803, YES), the identification unit 3813 compares the vehicle ID extracted from the entry in the detection log 3722 with the track ID extracted from the entry in the movement log 3621 (step 4804).

If the vehicle ID and the track ID do not match (step 4804, NO), the identification unit 3813 checks whether the vehicle type extracted from the entry in the detection log 3722 matches the vehicle type extracted from the entry in the movement log 3621 (step 4805).

When the vehicle type extracted from the entry in the detection log 3722 matches the vehicle type extracted from the entry in the movement log 3621 (step 4805, YES), the identification unit 3813 determines to correct the movement log 3621. The identification unit 3813 outputs a correction instruction indicating the track ID of the change target and the post-change track ID to the change unit 3814 (step 4806).

The track ID of the change target is the same track ID as the track ID extracted from the entry in the movement log 3621, and covers the track IDs contained in entries in a section in which the tracking reliability is lower than the predetermined value in a time range before or at the predetermined time or entries after the predetermined time. The post-change track ID is the vehicle ID extracted from the entry in the detection log 3722.

When the tracking reliability is equal to or higher than the predetermined value (step 4803, NO), the identification unit 3813 determines not to correct the movement log 3621, and the correction apparatus 3502 ends the processing without outputting the correction instruction. When the vehicle ID and the track ID match (step 4804, YES), the identification unit 3813 determines not to correct the movement log 3621, and the correction apparatus 3502 ends the processing without outputting the correction instruction.

When the vehicle type extracted from the entry in the detection log 3722 does not match the vehicle type extracted from the entry in the movement log 3621 (step 4805, NO), the identification unit 3813 determines not to correct the movement log 3621. The correction apparatus 3502 ends the processing without outputting the correction instruction.

The correction apparatuses 302 and 3502 may record the post-change movement log as another movement log instead of overwriting the pre-change movement log. The correction apparatuses 302 and 3502 may generate an integrated movement log by integrating the post-change movement log with the business log 521 or the detection log 3722.

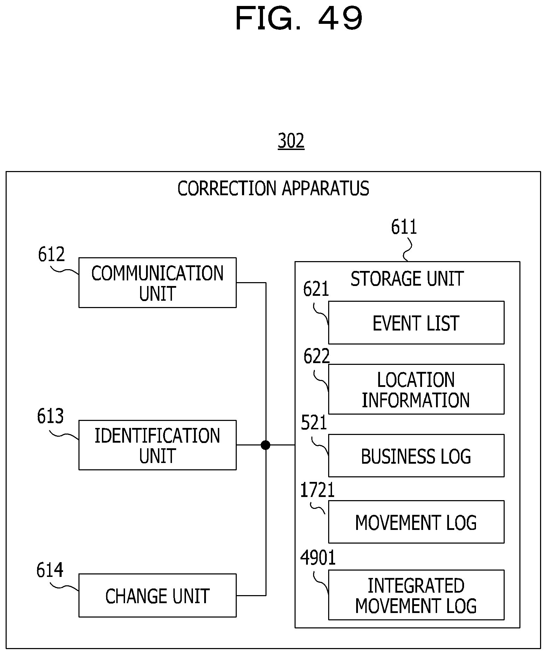

FIG. 49 illustrates a fourth functional configuration example of the correction apparatus 302 that generates an integrated movement log. The correction apparatus 302 in FIG. 49 has the same configuration as that of the correction apparatus 302 in FIG. 18. The change unit 614 integrates the post-change movement log 1721 and the business log 521 to generate an integrated movement log 4901, and stores the integrated movement log 4901 in the storage unit 611.

The communication unit 612 transmits the integrated movement log 4901 to the business process analysis apparatus 301, and the business process analysis apparatus 301 performs the business process analysis by using the integrated movement log 4901.

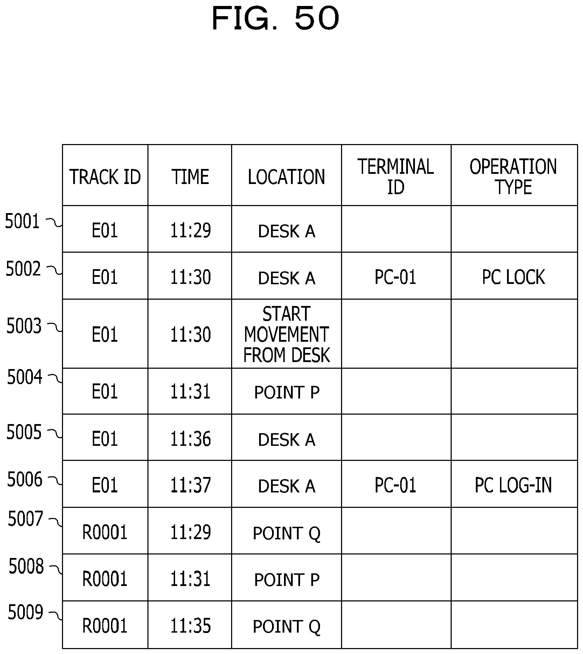

FIG. 50 illustrates an example of the integrated movement log 4901 generated by integrating the business log 521 in FIG. 23 and the post-replacement movement log 1721 in FIG. 25. The integrated movement log 4901 in FIG. 50 contains the items of the track ID, the time, the location, the terminal ID, and the operation type.

Entries 5001, 5003 to 5005, and 5007 to 5009 correspond to the entries in the movement log 1721 in FIG. 25, and do not contain data on the terminal ID and the operation type.

Entries 5002 and 5006 correspond to the entries in the business log 521 in FIG. 23 and contain data on the terminal ID and the operation type. Since the business log 521 in FIG. 23 does not contain the location, the data on the location in each of the entries 5002 and 5006 is complemented by using the data on the location in the immediately preceding entry. The location "desk A" in the entry 5002 is the same as the location in the immediately preceding entry 5001, and the location "desk A" in the entry 5006 is the same as the location in the immediately preceding entry 5005.

The correction apparatus 302 in FIG. 49 is capable of compressing the data of the business log 521 and the movement log 1721 by integrating the business log 521 and the movement log 1721. Therefore, the free space in the storage unit 611 increases by deleting the business log 521 and the movement log 1721 after the integrated movement log 4901 is generated.

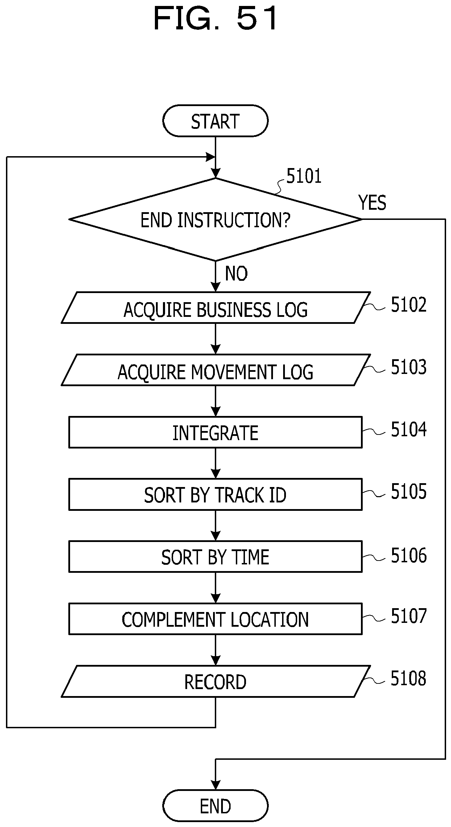

FIG. 51 is a flowchart illustrating an example of integrated movement log generation processing performed by the correction apparatus 302 in FIG. 49. First, the change unit 614 checks whether an end instruction is input from a user (step 5101).

When the end instruction is not input (step 5101, NO), the change unit 614 acquires the business log 521 (step 5102) and acquires the corrected movement log 1721 (step 5103) from the storage unit 611.

Next, the change unit 614 combines the entries in the business log 521 and the entries in the movement log 1721 according to the items in the integrated movement log 4901 (step 5104). The change unit 614 sorts the multiple entries thus combined in ascending or descending order of the track ID (step 5105), and sorts two or more entries including the same track ID in ascending order of the time (step 5106).

Next, the change unit 614 finds an entry that does not contain the data on a location, and complements the data on the location in the found entry by using the data on a location in the immediately preceding entry (step 5107). The change unit 614 records the multiple entries thus sorted into the integrated movement log 4901 (step 5108), and the correction apparatus 302 iterates the processing in step 5101 and the subsequent steps. When the end instruction is input (step 5101, YES), the correction apparatus 302 ends the processing.

In the business process analysis system or the vehicle management system, objects recorded in the business log, the detection log, and the movement log are not limited to persons or vehicles, and may be other objects such as animals, self-propelled robots, and aircrafts. The other objects also include products conveyed by a conveying mechanism such as a belt conveyor, paper documents, and so on. The sensor that detects an object may be a radio frequency identification (RFID) reader that reads an RFID tag attached to an object.

The configuration of the movement history change apparatus 101 in FIG. 1 is merely an example, and some of the components may be omitted or modified depending on the usage or conditions of the movement history change apparatus 101.

The configuration of the business process analysis system illustrated in FIG. 3 is merely an example, and some of the components may be omitted or modified depending on the usage or conditions of the business process analysis system. The configurations of the video analysis apparatus 303 in FIGs. 4, 17, and 28 are merely examples, and some of the components may be omitted or modified depending on the usage or conditions of the business process analysis system.

The configuration of the collection apparatus 304 illustrated in FIG. 5 is merely an example, and some of the components may be omitted or modified depending on the usage or conditions of the business process analysis system. The configuration of the correction apparatus 302 illustrated in FIGs. 6, 18, 29, and 49 is merely an example, and some of the components may be omitted or modified depending on the usage or conditions of the business process analysis system.

The configuration of the vehicle management system illustrated in FIG. 35 is merely an example, and some of the components may be omitted or modified depending on the usage or conditions of the vehicle management system. The configuration of the video analysis apparatus 3503 in FIG. 36 is merely an example, and some of the components may be omitted or modified depending on the usage or conditions of the vehicle management system.

The configuration of the collection apparatus 3504 in FIG. 37 is merely an example, and some of the components may be omitted or modified depending on the usage or conditions of the vehicle management system. The configuration of the correction apparatus 3502 in FIG. 38 is merely an example, and some of the components may be omitted or modified depending on the usage or conditions of the vehicle management system.

The flowchart in FIG. 2 is merely an example, and part of the processing may be omitted or modified depending on the configuration or conditions of the movement history change apparatus 101.

The flowcharts in FIGs. 13 to 16, 26, 27, 33, 34, and 51 are merely examples, and part of the processing may be omitted or modified depending on the configuration or conditions of the business process analysis system. The flowcharts in FIG. 45 to 48 are merely examples, and part of the processing may be omitted or modified depending on the configuration or conditions of the vehicle management system. For example, when the vehicle type is not used in the location determination processing in FIG. 48, the processing in step 4805 may be omitted.

The monitoring target regions 311 and the movement paths of the persons illustrated in FIGs. 7, 20, and 30 are merely examples, and the monitoring target region 311 and the movement paths of persons vary depending on an analysis target of the business process analysis system. The various kinds of data illustrated in FIGs. 8 to 12, 19, 23 to 25, 31, 32, and 50 are merely examples, and these kinds of data vary depending on the monitoring target region 311 and the movement paths of persons. The overlap determination processing illustrated in FIGs. 21 and 22 is merely an example, and whether or not two persons overlap each other may be determined by another determination method.

The monitoring target region 3511 and the movement paths of the vehicles illustrated in FIG. 39 are merely examples, and the monitoring target region 3511 and the movement paths of vehicles vary depending on an analysis target of the vehicle management system. The various kinds of data illustrated in FIGs. 40 to 44 are merely examples, and these kinds of data vary depending on the monitoring target region 3511 and the movement paths of vehicles.

The expressions (1) to (6) are merely examples, and whether or not two persons overlap each other may be determined by using other calculation expressions.

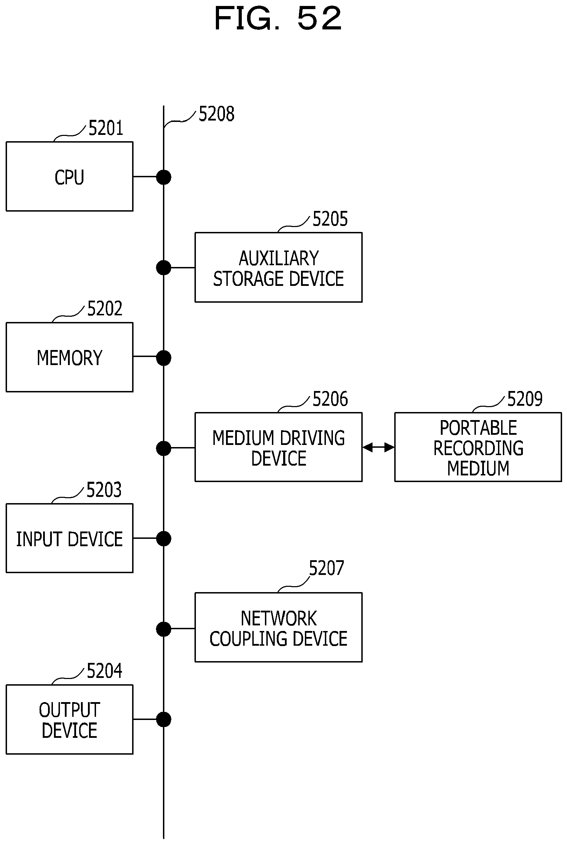

FIG. 52 illustrates a hardware configuration example of an information processing apparatus (computer) used as the movement history change apparatus 101 in FIG. 1, the video analysis apparatus 303 in FIGs. 4, 17, and 28, the collection apparatus 304 in FIG. 5, and the correction apparatus 302 in FIGs. 6, 18, 29, and 49. The information processing apparatus in FIG. 52 is also used as the video analysis apparatus 3503 in FIG. 36, the collection apparatus 3504 in FIG. 37, and the correction apparatus 3502 in FIG. 38.

The information processing apparatus in FIG. 52 includes a central processing unit (CPU) 5201, a memory 5202, an input device 5203, an output device 5204, an auxiliary storage device 5205, a medium driving device 5206, and a network coupling device 5207. These components are pieces of hardware, and are coupled to each other via a bus 5208.

The memory 5202 is, for example, a semiconductor memory such as a read-only memory (ROM), a random-access memory (RAM), or a flash memory, and stores a program and data to be used in processing. The memory 5202 may operate as the storage unit 111 in FIG. 1, the storage unit 411 in FIGs. 4, 17, and 28, the storage unit 511 in FIG. 5, or the storage unit 611 in FIGs. 6, 18, 29, and 49. The memory 5202 may operate as the storage unit 3611 in FIG. 36, the storage unit 3711 in FIG. 37, or the storage unit 3811 in FIG. 38.

The CPU 5201 (processor) operates as the identification unit 112 and the change unit 113 in FIG. 1 by executing a program using the memory 5202, for example. The CPU 5201 also operates as the tracking unit 413 in FIGs. 4, 17, and 28 by executing a program using the memory 5202.

The CPU 5201 also operates as the recording unit 513 in FIG. 5 by executing a program using the memory 5202. The CPU 5201 also operates as the identification unit 613 and the change unit 614 in FIGs. 6, 18, 29, and 49 by executing a program using the memory 5202.

The CPU 5201 also operates as the reliability assignment unit 1711 in FIGs. 17 and 28 by executing a program using the memory 5202. The CPU 5201 also operates as the motion determination unit 2811 in FIG. 28 by executing a program using the memory 5202.

The CPU 5201 also operates as the tracking unit 3613 and the reliability assignment unit 3614 in FIG. 36 by executing a program using the memory 5202. The CPU 5201 also operates as the recording unit 3713 in FIG. 37 by executing a program using the memory 5202. The CPU 5201 also operates as the identification unit 3813 and the change unit 3814 in FIG. 38 by executing a program using the memory 5202.

The input device 5203 is, for example, a keyboard, a pointing device, or the like, and is used by an operator or a user to input instructions or information. The output device 5204 is, for example, a display device, a printer, a speaker, or the like, and is used to output inquiries or instructions to an operator or a user and output processing results. The processing result may be the movement log 421, the movement log 1721, the movement log 2821, the movement log 3621, or the integrated movement log 4901.

The auxiliary storage device 5205 is, for example, a magnetic disk device, an optical disk device, a magneto-optical disk device, a tape device, or the like. The auxiliary storage device 5205 may be a hard disk drive or a flash memory. The information processing apparatus stores a program and data in the auxiliary storage device 5205, and may use the program and data by loading them into the memory 5202.

The auxiliary storage device 5205 may operate as the storage unit 111 in FIG. 1, the storage unit 411 in FIGs. 4, 17, and 28, the storage unit 511 in FIG. 5, or the storage unit 611 in FIGs. 6, 18, 29, and 49. The auxiliary storage device 5205 may operate as the storage unit 3611 in FIG. 36, the storage unit 3711 in FIG. 37, or the storage unit 3811 in FIG. 38.

The medium driving device 5206 drives a portable recording medium 5209, and accesses contents recorded therein. The portable recording medium 5209 is a memory device, a flexible disk, an optical disk, a magneto-optical disk, or the like. The portable recording medium 5209 may be a compact disk read-only memory (CD-ROM), a digital versatile disk (DVD), a Universal Serial Bus (USB) memory, or the like. The user or operator may store a program and data in the portable recording medium 5209, and may use the program and data by loading them into the memory 5202.

A computer-readable recording medium in which the programs and data to be used in the processing are stored as described above is a physical (non-transitory) recording medium such as the memory 5202, the auxiliary storage device 5205, or the portable recording medium 5209.

The network coupling device 5207 is a communication interface circuit which is coupled to the communication network 307 or 3507, and performs data conversion for communication. The information processing apparatus may receive a program and data from an external device via the network coupling device 5207, and may use the program and data by loading them into the memory 5202.

The network coupling device 5207 may operate as the communication unit 412 in FIGs. 4, 17, and 28, the communication unit 512 in FIG. 5, or the communication unit 612 in FIGs. 6, 18, 29, and 49. The network coupling device 5207 may operate as the communication unit 3612 in FIG. 36, the communication unit 3712 in FIG. 37, or the communication unit 3812 in FIG. 38.

The information processing apparatus does not necessarily include all of the components in FIG. 52, and some of the components may be omitted depending on the use or conditions of the information processing apparatus. For example, if an interface with the user or the operator is not used, the input device 5203 and the output device 5204 may be omitted. When the portable recording medium 5209 is not used, the medium driving device 5206 may be omitted.

As the business process analysis apparatus 301 in FIG. 3 and the vehicle management apparatus 3501 in FIG. 35, an information processing device similar to that in FIG. 52 may be used.

While the embodiments of the disclosure and advantages thereof have been described in detail, a person skilled in the art may make various modifications, additions, and omissions without departing from the scope of the disclosure, which is set forth in the appended claims.

With regard to the embodiments described with reference to FIGs. 1 to 52, the following appendices are further disclosed.

**Claims**

1. A movement history change method for a computer to execute a process comprising:

acquiring identification information of a first object detected at a first location by a sensor and a detection timing of the first object from object detection history information that indicates time-series of detection;
identifying identification information of a second object present at the first location at a first timing corresponding to the detection timing in the object movement history information generated from a video; and
changing the identification information of the second object to the identification information of the first object in the object movement history information.

2. The movement history change method according to claim 1, wherein the changing includes, when the object movement history information indicates that the first object and the second object present at a second location at a second timing before the detection time of the first object, replacing the identification information of the first object and the identification information of the second object included in a section from the second timing to the first timing in the object movement history information.

3. The movement history change method according to claim 2, wherein the object movement history information includes tracking reliability for each of the first object and the second object, the tracking reliability being obtained by tracking the first object and the second object from the video, and
the replacing includes replacing the identification information of the first object and the identification information of the second object included in the section when the tracking reliability for both of the first object and the second object included in the section is lower than a certain value.

4. The movement history change method according to claim 2 or 3, wherein

the object movement history information includes motion information of each of the first object and the second object, the motion information being obtained by recognizing motions of the first object and the second object from the video, and
the replacing includes replacing the identification information of the first object and the identification information of the second object included in the section when the motion information of the second object at the first timing corresponds to a certain motion at the first location.

5. The movement history change method according to claim 1, wherein the object movement history information includes tracking reliability for the second object obtained by tracking the second object in the video, and
the changing includes changing the identification information of the second object to the identification information of the first object when the tracking reliability for the second object at the first timing is lower than a certain value.

6. The movement history change method according to claim 5, wherein the object movement history information includes type information of the second object obtained by recognizing a type of the second object from the video, and
the changing includes changing the identification information of the second object to the identification information of the first object when the type information of the second object at the first timing corresponds to a type of the first object.

7. The movement history change method according to any one of claims 1 to 6, wherein the process further comprising
generating integrated movement history information by integrating the object detection history information and the object movement history information.

8. The movement history change method according to any one of claims 1 to 7, wherein

the sensor is a terminal device,
the first object is a person who operated the terminal device at the first location, and
the second object is a person captured in a certain region around the terminal device in the video.

9. The movement history change method according to any one of claims 1 to 7, wherein

the sensor is a vehicle detection apparatus,
the first object is a vehicle which passed through the first location, and
the second object is a vehicle captured in a certain region around the vehicle detection apparatus in the video.

10. A movement history change program that causes at least one computer to execute a process, the process comprising:

acquiring identification information of a first object detected at a first location by a sensor and a detection timing of the first object from object detection history information that indicates time-series of detection;
identifying identification information of a second object present at the first location at a first timing corresponding to the detection timing in the object movement history information generated from a video; and
changing the identification information of the second object to the identification information of the first object in the object movement history information.

11. The movement history change program according to claim 10, wherein
the changing includes, when the object movement history information indicates that the first object and the second object present at a second location at a second timing before the detection time of the first object, replacing the identification information of the first object and the identification information of the second object included in a section from the second timing to the first timing in the object movement history information.

12. The movement history change program according to claim 11, wherein

the object movement history information includes tracking reliability for each of the first object and the second object, the tracking reliability being obtained by tracking the first object and the second object from the video, and
the replacing includes replacing the identification information of the first object and the identification information of the second object included in the section when the tracking reliability for both of the first object and the second object included in the section is lower than a certain value.

13. The movement history change program according to claim 11 or 12, wherein

the object movement history information includes motion information of each of the first object and the second object, the motion information being obtained by recognizing motions of the first object and the second object from the video, and
the replacing includes replacing the identification information of the first object and the identification information of the second object included in the section when the motion information of the second object at the first timing corresponds to a certain motion at the first location.

14. A movement history change device comprising:

one or more memories; and
one or more processors coupled to the one or more memories and the one or more processors configured to
acquire identification information of a first object detected at a first location by a sensor and a detection timing of the first object from object detection history information that indicates time-series of detection,
identify identification information of a second object present at the first location at a first timing corresponding to the detection timing in the object movement history information generated from a video, and
change the identification information of the second object to the identification information of the first object in the object movement history infor-

mation.

# FIG. 1

101

MOVEMENT HISTORY CHANGE APPARATUS

112 IDENTIFICATION UNIT

CHANGE UNIT 113

111 STORAGE UNIT

121 OBJECT DETECTION HISTORY INFORMATION

122 OBJECT MOVEMENT HISTORY INFORMATION

# FIG. 2

START

201 — ACQUIRE IDENTIFICATION INFORMATION OF FIRST OBJECT AND DETECTION TIME

202 — IDENTIFY IDENTIFICATION INFORMATION OF SECOND OBJECT

203 — CHANGE IDENTIFICATION INFORMATION OF SECOND OBJECT TO IDENTIFICATION INFORMATION OF FIRST OBJECT

END

# FIG. 3

EP 4 044 129 A1

# FIG. 4

303

VIDEO ANALYSIS APPARATUS

411

412 COMMUNICATION UNIT

STORAGE UNIT

421

MOVEMENT LOG

413 TRACKING UNIT

# FIG. 5

<u>304</u>

# FIG. 6

302

CORRECTION APPARATUS

611

612 COMMUNICATION UNIT

613 IDENTIFICATION UNIT

614 CHANGE UNIT

STORAGE UNIT

621 EVENT LIST

622 LOCATION INFORMATION

521 BUSINESS LOG

421 MOVEMENT LOG

# FIG. 7

EP 4 044 129 A1

TIME

BUSINESS LOG

E01
PC LOG-OUT

E01
PC LOG-IN

MOVEMENT LOG  DESK A
E01
START MOVING

DESK A

START MOVING

SHELF Z
R0001

DESK A

STOP MOVING

DESK A

START MOVING

CHANGE

SHELF Z
E01

DESK A

STOP MOVING

DESK A

START MOVING

# FIG. 8

| EVENT |
|---|
| PC LOG-IN |
| SECURITY DOOR UNLOCKING |
| INDIVIDUAL SHELF UNLOCKING |

# FIG. 9

| TERMINAL ID | LOCATION |
|---|---|
| PC-01 | DESK A |
| PC-12 | DESK E |
| PC-23 | DESK C |
| PC-46 | DESK B |

# FIG. 10

| DETECTION TIME | PERSONAL ID | TERMINAL ID | OPERATION TYPE |
|---|---|---|---|
| 11:30 | E01 | PC-01 | PC LOCK |
| 11:32 | E14 | PC-12 | PC LOG-IN |
| 11:40 | E01 | PC-01 | PC LOG-IN |
| 11:41 | E01 | PC-01 | SYSTEM ACTIVATION |
| 11:45 | E37 | T-01 | TERMINAL OPERATION |
| 11:47 | E29 | PC-23 | PC LOCK |
| 11:55 | E01 | PC-01 | PRINT |
| 11:56 | E01 | PC-01 | PC LOCK |
| 11:58 | E01 | P-01 | PRINTER ACCESS |

# FIG. 11

| TRACK ID | TIME | LOCATION |
|:---:|:---:|:---:|
| E01 | 11:29 | DESK A |
| E01 | 11:30 | START MOVING FROM DESK A |
| R0001 | 11:31 | SHELF Z |
| R0001 | 11:38 | DESK A |
| R0001 | 11:56 | START MOVING FROM DESK A |
| R0001 | 11:58 | PRINTER U |

# FIG. 12

| TRACK ID | TIME | LOCATION |
|:---:|:---:|:---:|
| E01 | 11:29 | DESK A |
| E01 | 11:30 | START MOVING FROM DESK A |
| E01 | 11:31 | SHELF Z |
| E01 | 11:38 | DESK A |
| E01 | 11:56 | START MOVING FROM DESK A |
| E01 | 11:58 | PRINTER U |

# FIG. 13

```
        ┌─────────────┐
        │    START    │
        └─────────────┘
               │
               ▼
        ╱─────────────╲          1301
    ┌──╱               ╲─────────────┐ YES
    │  ╲ END INSTRUCTION?╱           │
    │   ╲───────────────╱            │
    │          │ NO                  │
    │          ▼                     │
    │  ┌───────────────────────┐     │
    │  │ ACQUIRE DETECTION TIME│~1302│
    │  └───────────────────────┘     │
    │          │                     │
    │          ▼                     │
    │  ┌───────────────────────┐     │
    │  │  ACQUIRE PERSONAL ID  │~1303│
    │  └───────────────────────┘     │
    │          │                     │
    │          ▼                     │
    │  ┌───────────────────────┐     │
    │  │ ACQUIRE OPERATION TYPE│~1304│
    │  └───────────────────────┘     │
    │          │                     │
    │          ▼                     │
    │  ╱───────────────────────╱     │
    │ ╱        RECORD          ╱~1305 │
    │╱───────────────────────╱       │
    │          │                     │
    └──────────┘                     │
                                     ▼
                            ┌─────────────┐
                            │     END     │
                            └─────────────┘
```

# FIG. 14

START

1401
END INSTRUCTION? —— YES

NO

TRACK —— 1402

1403
IS TRACKING SUCCESSFUL? —— NO

1406
DETECT NEW PERSON

1407
ASSIGN NEW TRACK ID

YES

ADD LOCATION —— 1404

RECORD —— 1405

END

# FIG. 15

START

END INSTRUCTION? 1501

YES

NO

ACQUIRE BUSINESS LOG 1502

ACQUIRE MOVEMENT LOG 1503

IS THERE EVENT? 1504

NO

YES

MAKE LOCATION DETERMINATION 1505

CORRECTION INSTRUCTION? 1506

NO

YES

CORRECT MOVEMENT LOG 1507

END

# FIG. 16

```
                    ┌─────────────┐
                    │    START    │
                    └──────┬──────┘
                           ▼
        ┌──────────────────────────────────────────┐
        │ EXTRACT DETECTION TIME, PERSONAL ID, AND  │ ～ 1601
        │ TERMINAL ID FROM ENTRY IN BUSINESS LOG    │
        └──────────────────┬───────────────────────┘
                           ▼
        ┌──────────────────────────────────────────┐
        │            OBTAIN LOCATION X1             │ ～ 1602
        └──────────────────┬───────────────────────┘
                           ▼
        ┌──────────────────────────────────────────┐
        │ EXTRACT TRACK ID AND LOCATION X2 FROM     │ ～ 1603
        │           ENTRY IN MOVEMENT LOG           │
        └──────────────────┬───────────────────────┘
                           ▼
           NO          ╱───────────╲  1604
        ◄──────────────   X1 = X2 ?
                        ╲───────────╱
                           │ YES
                           ▼
           YES         ╱──────────────────╲  1605
        ◄──────────────  PERSONAL ID = TRACK ID?
                        ╲──────────────────╱
                           │ NO
                           ▼
        ┌──────────────────────────────────────────┐
        │       OUTPUT CORRECTION INSTRUCTION       │ ～ 1606
        └──────────────────┬───────────────────────┘
                           ▼
                    ┌─────────────┐
                    │     END     │
                    └─────────────┘
```

# FIG. 17

303

```
VIDEO ANALYSIS APPARATUS

412   COMMUNICATION
      UNIT

                              411   STORAGE UNIT

413   TRACKING UNIT

                              1721  MOVEMENT LOG

1711  RELIABILITY
      ASSIGNMENT UNIT
```

# FIG. 18

302

CORRECTION APPARATUS

611

612 COMMUNICATION UNIT

STORAGE UNIT

621 EVENT LIST

622 LOCATION INFORMATION

613 CHANGE UNIT

521 BUSINESS LOG

1721 MOVEMENT LOG

614 CHANGE UNIT

# FIG. 19

TIME →

| ACTION | PC LOCK | MOVE TO SHELF | GET SEATED | PC LOG-IN | EDITING WORK | PRINTOUT INSTRUCTION | LEAVE DESK |

**BUSINESS LOG**

1901
| DETECTION TIME | 11:30 |
|---|---|
| PERSONAL ID | E01 |
| OPERATION TYPE | PC LOCK |

1902
| 11:40 |
|---|
| E01 |
| PC LOG-IN |

1903
| 11:41 |
|---|
| E01 |
| SYSTEM ACTIVATION |

1904
| 11:55 |
|---|
| E01 |
| PRINT |

1905
| 11:56 |
|---|
| E01 |
| PC LOCK |

**MOVEMENT LOG**

**BEFORE CHANGE**

1911
| TRACK ID | E01 |
|---|---|
| TRACKING RELIABILITY | 100% |
| LOCATION | DESK A |

1912
| R0001 |
|---|
| 0% |
| SHELF Z |

1913
| R0001 |
|---|
| 10% |
| DESK A |

**AFTER CHANGE**

1912
| E01 |
|---|
| 100% |
| SHELF Z |

1913
| E01 |
|---|
| 100% |
| DESK A |

1914
| E01 |
|---|
| 100% |
| PRINTER U |

EP 4 044 129 A1

# FIG. 20

TIME

BUSINESS LOG

| E01 |
PC LOG-OUT

| E01 |
PC LOG-IN

MOVEMENT LOG

DESK A
| E01 |
TRACKING
RELIABILITY 100%

DESK A
●
START
MOVING

POINT P
| E01 |
TRACKING
RELIABILITY 50%

POINT Q
| R0001 |
TRACKING
RELIABILITY 0%

POINT P
| R0001 |
TRACKING
RELIABILITY 0%

DESK A
●
STOP MOVING

DESK A
●
START
MOVING

# FIG. 21

# FIG. 22

# FIG. 23

| DETECTION TIME | PERSONAL ID | TERMINAL ID | OPERATION TYPE |
|---|---|---|---|
| 11:30 | E01 | PC-01 | PC LOCK |
| 11:37 | E01 | PC-01 | PC LOG-IN |

# FIG. 24

| TRACK ID | TRACKING RELIABILITY | TIME | LOCATION |
|:---:|:---:|:---:|:---:|
| E01 | 100 | 11:29 | DESK A |
| R0001 | 0 | 11:29 | POINT Q |
| E01 | 100 | 11:30 | START MOVING FROM DESK A |
| R0001 | 0 | 11:31 | POINT P |
| E01 | 50 | 11:31 | POINT P |
| E01 | 50 | 11:35 | POINT Q |
| R0001 | 0 | 11:36 | DESK A |

# FIG. 25

| TRACK ID | TRACKING RELIABILITY | TIME | LOCATION |
|---|---|---|---|
| E01 | 100 | 11:29 | DESK A |
| R0001 | 0 | 11:29 | POINT Q |
| E01 | 100 | 11:30 | START MOVING FROM DESK A |
| E01 | 100 | 11:31 | POINT P |
| R0001 | 0 | 11:31 | POINT P |
| R0001 | 0 | 11:35 | POINT Q |
| E01 | 100 | 11:36 | DESK A |

# FIG. 26

START

2601
END INSTRUCTION? — YES

NO

TRACK — 2602

2603
IS TRACKING SUCCESSFUL? — NO

YES

MAKE OVERLAP DETERMINATION — 2604

SET TRACKING RELIABILITY — 2605

DETECT NEW PERSON — 2608

ASSIGN NEW TRACK ID — 2609

SET TRACKING RELIABILITY — 2610

ADD LOCATION — 2606

RECORD — 2607

END

# FIG. 27

START

EXTRACT DETECTION TIME, PERSONAL ID, AND TERMINAL ID FROM ENTRY IN BUSINESS LOG ~ 2701

OBTAIN LOCATION X1 ~ 2702

EXTRACT TRACK ID AND TRACKING RELIABILITY FROM ENTRY IN MOVEMENT LOG ~ 2703

TRACKING RELIABILITY < PREDETERMINED VALUE? ⌐2704
NO

YES

PERSONAL ID = TRACK ID? ⌐2705
YES

NO

SEARCH FOR ANOTHER TRACK ID ~ 2706

OUTPUT CORRECTION INSTRUCTION ~ 2707

END

# FIG. 28

303

VIDEO ANALYSIS APPARATUS

411

412 COMMUNICATION UNIT

STORAGE UNIT

413 TRACKING UNIT

2821 MOVEMENT LOG

1711 RELIABILITY ASSIGNMENT UNIT

2811 MOTION DETERMINATION UNIT

# FIG. 29

302

CORRECTION APPARATUS

611

612 COMMUNICATION UNIT

613 IDENTIFICATION UNIT

614 CHANGE UNIT

STORAGE UNIT

621 EVENT LIST

622 LOCATION INFORMATION

521 BUSINESS LOG

2821 MOVEMENT LOG

# FIG. 30

# FIG. 31

| TRACK ID | TRACKING RELIABILITY | MOTION OF PERSON | TIME | LOCATION |
|---|---|---|---|---|
| E01 | 100 | SEATED | 11:29 | DESK A |
| R0001 | 0 | WALKING | 11:29 | POINT Q |
| E01 | 100 | STANDING | 11:30 | START MOVING FROM DESK A |
| R0001 | 0 | WALKING | 11:31 | POINT P |
| E01 | 50 | WALKING | 11:31 | POINT P |
| E01 | 50 | STANDING | 11:35 | DESK A |
| R0001 | 0 | SEATED | 11:36 | DESK A |

# FIG. 32

| TRACK ID | TRACKING RELIABILITY | MOTION OF PERSON | TIME | LOCATION |
|----------|----------------------|------------------|------|----------|
| E01 | 100 | SEATED | 11:29 | DESK A |
| R0001 | 0 | WALKING | 11:29 | POINT Q |
| E01 | 100 | STANDING | 11:30 | START MOVING FROM DESK A |
| E01 | 100 | WALKING | 11:31 | POINT P |
| R0001 | 0 | WALKING | 11:31 | POINT P |
| R0001 | 0 | STANDING | 11:35 | DESK A |
| E01 | 100 | SEATED | 11:36 | DESK A |

# FIG. 33

START

3301
END INSTRUCTION?

YES

NO

TRACK — 3302

3303
IS TRACKING SUCCESSFUL?

NO

YES

MAKE OVERLAP DETERMINATION — 3304

SET TRACKING RELIABILITY — 3305

DETECT NEW PERSON — 3309

ASSIGN NEW TRACK ID — 3310

SET TRACKING RELIABILITY — 3311

ADD LOCATION — 3306

MAKE MOTION DETERMINATION — 3307

RECORD — 3308

END

# FIG. 34

```
                    ( START )
                        │
                        ▼
┌─────────────────────────────────────────────────┐
│  EXTRACT DETECTION TIME, PERSONAL ID, AND        │~ 3401
│  TERMINAL ID FROM ENTRY IN BUSINESS LOG          │
└─────────────────────────────────────────────────┘
                        │
                        ▼
┌─────────────────────────────────────────────────┐
│            OBTAIN LOCATION X1                    │~ 3402
└─────────────────────────────────────────────────┘
                        │
                        ▼
┌─────────────────────────────────────────────────┐
│  EXTRACT TRACK ID, TRACKING RELIABILITY, AND     │~ 3403
│  MOTION OF PERSON FROM ENTRY IN MOVEMENT LOG     │
└─────────────────────────────────────────────────┘
                        │
                        ▼
                                        3404
         NO              TRACKING RELIABILITY <
      ◄────────────      PREDETERMINED VALUE?
                        │
                        │ YES
                        ▼
                                        3405
         YES
      ◄────────────    PERSONAL ID = TRACK ID?
                        │
                        │ NO
                        ▼
                                        3406
         NO
      ◄────────────    DOES MOTION OF PERSON AGREE?
                        │
                        │ YES
                        ▼
┌─────────────────────────────────────────────────┐
│            SEARCH FOR ANOTHER TRACK ID           │~ 3407
└─────────────────────────────────────────────────┘
                        │
                        ▼
┌─────────────────────────────────────────────────┐
│         OUTPUT CORRECTION INSTRUCTION            /~ 3408
└─────────────────────────────────────────────────┘
                        │
                        ▼
                    (  END  )
```

# FIG. 35

VEHICLE MANAGEMENT APPARATUS 3501

CORRECTION APPARATUS 3502

VIDEO ANALYSIS APPARATUS 3503

3507

3504 COLLECTION APPARATUS

3508

3506-1
3512-1

3506-2
3512-2

3511

3505

EP 4 044 129 A1

# FIG. 36

<u>3503</u>

# FIG. 37

3504

COLLECTION APPARATUS

3711

3712 COMMUNICATION UNIT

STORAGE UNIT

3721 VEHICLE INFORMATION

3722 DETECTION LOG

3713 RECORDING UNIT

# FIG. 38

3502

CORRECTION APPARATUS

3811

3812 COMMUNICATION UNIT

STORAGE UNIT

3821 EVENT LIST

3813 IDENTIFICATION UNIT

3722 DETECTION LOG

3814 CHANGE UNIT

3621 MOVEMENT LOG

# FIG. 39

# FIG. 40

| EVENT |
|-------|
| PASSING THROUGH GATE G2 |

# FIG. 41

| VEHICLE TYPE | VEHICLE ID |
|:---:|:---:|
| A | C1234 |
| A | C5678 |
| A | C9024 |
| B | T0012 |

# FIG. 42

| DETECTION TIME | VEHICLE ID | VEHICLE TYPE | DETECTED INCIDENT |
|---|---|---|---|
| 13:30 | C1234 | A | PASSING THROUGH GATE G1 |
| 13:50 | C1234 | A | PASSING THROUGH GATE G2 |

# FIG. 43

| TRACK ID | TRACKING RELIABILITY | TIME | VEHICLE TYPE | LOCATION |
|----------|---------------------|------|--------------|----------|
| C1234 | 100 | 13:29 | A | GATE G1 |
| T0012 | 100 | 13:29 | B | POINT V |
| : | : | : | : | : |
| R0001 | 0 | 13:48 | A | POINT V |
| R0001 | 0 | 13:50 | A | GATE |
| T0012 | 100 | 13:50 | B | POINT V |

# FIG. 44

| TRACK ID | TRACKING RELIABILITY | TIME | VEHICLE TYPE | LOCATION |
|---|---|---|---|---|
| C1234 | 100 | 13:29 | A | GATE G1 |
| T0012 | 100 | 13:29 | B | POINT V |
| : | : | : | : | : |
| C1234 | 100 | 13:48 | A | POINT V |
| C1234 | 100 | 13:50 | A | GATE G2 |
| T0012 | 100 | 13:50 | B | POINT V |

# FIG. 45

```
                    ┌─────────┐
                    │  START  │
                    └────┬────┘
                         │
         ┌───────────────┤
         │               ▼          ╱4501
         │           ◇◇◇◇◇◇◇◇◇◇◇              YES
         │        ◇◇ END INSTRUCTION? ◇◇──────────┐
         │           ◇◇◇◇◇◇◇◇◇◇◇                  │
         │               │ NO                      │
         │               ▼                         │
         │    ┌──────────────────────┐             │
         │    │ ACQUIRE DETECTION TIME│  ~ 4502     │
         │    └───────────┬──────────┘             │
         │                ▼                         │
         │    ┌──────────────────────┐             │
         │    │  RECOGNIZE VEHICLE ID │  ~ 4503     │
         │    └───────────┬──────────┘             │
         │                ▼                         │
         │    ┌──────────────────────┐             │
         │    │  ACQUIRE VEHICLE TYPE │  ~ 4504     │
         │    └───────────┬──────────┘             │
         │                ▼                         │
         │    ╱──────────────────────╱             │
         │   ╱        RECORD         ╱  ~ 4505      │
         │  ╱──────────────────────╱               │
         │               │                         │
         └───────────────┘                         │
                                                   ▼
                                            ┌─────────┐
                                            │   END   │
                                            └─────────┘
```

67

# FIG. 46

START

4601
END INSTRUCTION? — YES

NO

TRACK — 4602

4603
IS TRACKING SUCCESSFUL? — NO

YES

4608
DETECT NEW VEHICLE

4604
MAKE OVERLAP DETERMINATION

4609
ASSIGN NEW TRACK ID

4605
SET TRACKING RELIABILITY

4610
SET TRACKING RELIABILITY

ADD LOCATION — 4606

RECORD — 4607

END

# FIG. 47

```
        ┌──────────┐
        │  START   │
        └────┬─────┘
             │
    ┌────────▼──────────┐           4701
    │   END INSTRUCTION? │ ──────── YES ────┐
    └────────┬──────────┘                   │
             │ NO                           │
    ┌────────▼──────────────┐  4702         │
    │  ACQUIRE DETECTION LOG │               │
    └────────┬──────────────┘               │
             │                              │
    ┌────────▼──────────────┐  4703         │
    │  ACQUIRE MOVEMENT LOG  │               │
    └────────┬──────────────┘               │
             │                              │
    ┌────────▼──────────┐  4704             │
NO ◄│   IS THERE EVENT?  │                  │
    └────────┬──────────┘                   │
             │ YES                          │
    ┌────────▼──────────────────┐  4705     │
    │  MAKE LOCATION DETERMINATION│          │
    └────────┬──────────────────┘           │
             │                              │
    ┌────────▼──────────────┐  4706         │
NO ◄│ CORRECTION INSTRUCTION?│               │
    └────────┬──────────────┘               │
             │ YES                          │
    ┌────────▼──────────────┐  4707         │
    │  CORRECT MOVEMENT LOG  │               │
    └───────────────────────┘               │
                                            │
        ┌──────────┐                        │
        │   END    │ ◄──────────────────────┘
        └──────────┘
```

# FIG. 48

START

EXTRACT DETECTION TIME, VEHICLE ID, VEHICLE TYPE, AND DETECTED INCIDENT FROM ENTRY IN DETECTION LOG — 4801

EXTRACT TRACK ID, TRACKING RELIABILITY, AND VEHICLE TYPE FROM ENTRY IN MOVEMENT LOG — 4802

TRACKING RELIABILITY < PREDETERMINED VALUE? — 4803

NO

YES

VEHICLE ID = TRACK ID? — 4804

YES

NO

DO VEHICLE TYPES MATCH? — 4805

NO

YES

OUTPUT CORRECTION INSTRUCTION — 4806

END

# FIG. 49

302

CORRECTION APPARATUS

611

612 COMMUNICATION UNIT

STORAGE UNIT

621 EVENT LIST

622 LOCATION INFORMATION

613 IDENTIFICATION UNIT

521 BUSINESS LOG

1721 MOVEMENT LOG

614 CHANGE UNIT

4901 INTEGRATED MOVEMENT LOG

# FIG. 50

| TRACK ID | TIME | LOCATION | TERMINAL ID | OPERATION TYPE |
|----------|------|----------|-------------|----------------|
| E01 | 11:29 | DESK A | | |
| E01 | 11:30 | DESK A | PC-01 | PC LOCK |
| E01 | 11:30 | START MOVEMENT FROM DESK | | |
| E01 | 11:31 | POINT P | | |
| E01 | 11:36 | DESK A | | |
| E01 | 11:37 | DESK A | PC-01 | PC LOG-IN |
| R0001 | 11:29 | POINT Q | | |
| R0001 | 11:31 | POINT P | | |
| R0001 | 11:35 | POINT Q | | |

# FIG. 51

START

5101

END INSTRUCTION? — YES

NO

ACQUIRE BUSINESS LOG — 5102

ACQUIRE MOVEMENT LOG — 5103

INTEGRATE — 5104

SORT BY TRACK ID — 5105

SORT BY TIME — 5106

COMPLEMENT LOCATION — 5107

RECORD — 5108

END

# FIG. 52

Europäisches
Patentamt

European
Patent Office

Office européen
des brevets

# EUROPEAN SEARCH REPORT

Application Number

EP 21 20 7974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/053191 A1 (KOYAMA KAZUYA [JP]) 23 February 2017 (2017-02-23) * abstract; figure 9 * * paragraphs [0051], [0052], [0056], [0057], [0062], [0063] * | 1-14 | INV. G06V20/50 G06V20/52 |
| A | AYERS D ET AL: "Monitoring human behavior from video taken in an office environment", IMAGE AND VISION COMPUTING, ELSEVIER, GUILDFORD, GB, vol. 19, no. 12, 1 October 2001 (2001-10-01), pages 833-846, XP009103099, ISSN: 0262-8856, DOI: 10.1016/S0262-8856(01)00047-6 * the whole document * | 1-14 | |
| A | US 2020/322792 A1 (SHIMADA KENICHI [JP]) 8 October 2020 (2020-10-08) * abstract * | 1-14 | |
| A | US 2015/262019 A1 (MIYANO HIROYOSHI [JP]) 17 September 2015 (2015-09-17) * abstract * | 1-14 | TECHNICAL FIELDS SEARCHED (IPC) G06V |

The present search report has been drawn up for all claims

| Place of search | Date of completion of the search | Examiner |
|---|---|---|
| The Hague | 14 April 2022 | Isa, Sabine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 7974

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2022

| Patent document cited in search report | | Publication date | Patent family member(s) | | Publication date |
|---|---|---|---|---|---|
| US 2017053191 | A1 | 23-02-2017 | JP WO2015166612 | A1 | 20-04-2017 |
| | | | US 2017053191 | A1 | 23-02-2017 |
| | | | US 2019347528 | A1 | 14-11-2019 |
| | | | WO 2015166612 | A1 | 05-11-2015 |
| US 2020322792 | A1 | 08-10-2020 | CN 111316264 | A | 19-06-2020 |
| | | | JP 7007177 | B2 | 24-01-2022 |
| | | | JP 2019109858 | A | 04-07-2019 |
| | | | US 2020322792 | A1 | 08-10-2020 |
| | | | WO 2019124103 | A1 | 27-06-2019 |
| US 2015262019 | A1 | 17-09-2015 | JP WO2014050432 | A1 | 22-08-2016 |
| | | | US 2015262019 | A1 | 17-09-2015 |
| | | | WO 2014050432 | A1 | 03-04-2014 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020091664 A